# EUROPÄISCHE PATENTSCHRIFT

(11) **EP 2 701 929 B1**
(45) Veröffentlichungstag und Bekanntmachung des Hinweises auf die Patenterteilung: **19.08.2015**
(21) Anmeldenummer: 12721211.6
(22) Anmeldetag: 27.04.2012
(51) Int. Cl.: B60C 1/00, C08K 5/36, C08K 5/54, C08L 21/00, C08K 5/37, C08K 5/372, C08K 3/36, C08K 5/378, C08K 5/548, C08K 13/02, C08L 9/06

(54) **KIESELSÄUREHALTIGE KAUTSCHUKMISCHUNGEN MIT SCHWEFELHALTIGEN ADDITIVEN**
RUBBER MIXTURES CONTAINING SILICIC ACID AND SULFUR-CONTAINING ADDITIVES
MÉLANGES DE CAOUTCHOUC À BASE D'ACIDE SILICIQUE, CONTENANT DES ADDITIFS À BASE DE SOUFRE

(30) Priorität: 29.04.2011 EP 11164319
(43) Veröffentlichungstag der Anmeldung: 05.03.2014
(73) Patentinhaber: LANXESS Deutschland GmbH, 50569 Köln (DE)
(72) Erfinder: WIEDEMEIER, Melanie, 41540 Dormagen (DE); WEIDENHAUPT, Hermann-Josef, 50259 Pulheim (DE); FELDHUES, Ulrich, 51465 Bergisch-Gladbach (DE); MOLL, Irene, 41468 Neuss (DE)
(86) Internationale Anmeldenummer: PCT/EP2012/057863
(87) Internationale Veröffentlichungsnummer: WO 2012/146762

(56) Entgegenhaltungen:
- EP-A1- 0 489 313
- EP-A1- 0 791 624
- EP-A1- 0 960 906
- EP-A1- 1 095 974
- EP-A1- 1 600 439
- EP-A2- 1 586 563
- EP-B1- 0 791 622
- US-A- 3 869 435
- US-A- 5 717 038

## Beschreibung

Die vorliegende Erfindung betrifft kieselsäurehaltige Kautschukmischungen, die schwefelhaltige Additive enthalten, deren Verwendung und daraus hergestellte Kautschukvulkanisate.

Zur Herstellung von Reifen mit verringertem Rollwiderstand sind eine Reihe von Lösungsvorschlägen ausgearbeitet worden. In DE-A 2 255 577 und 4 435 311, EP-A1 0 0670 347 sowie US-A-4 709 065 sind bestimmte polysulfidische Silane als Verstärkungsadditive für kieselsäurehaltige Kautschukvulkanisate beschrieben worden. Nachteilig bei der Verwendung der dort beschriebenen polysulfidischen Silane als Verstärkungsadditive für kieselsäurehaltige Kautschukvülkanisate ist jedoch, dass zur Erreichung einer akzeptablen Verarbeitbarkeit relativ große Mengen der teuren polysulfidischen Silane erforderlich sind und dass die Härte unbefriedigend ist.

Zur Verbesserung der Verarbeitbarkeit von kieselsäurehaltigen Kautschukmischungen wurden weitere Zusatzstoffe vorgeschlagen, wie Fettsäureester, Fettsäuresalze oder Mineralöle. Die genannten Zusatzstoffe besitzen den Nachteil, dass sie die Fließfähigkeit erhöhen, gleichzeitig aber die Spannungswerte bei größerer Dehnung (z.B. 100% bis 300%) oder auch die Härte der Vulkanisate vermindern, so dass die verstärkende Wirkung des Füllstoffes Einbuße erleidet. Eine zu geringe Härte oder Steifigkeit des Vulkanisates resultiert aber in unbefriedigendes Fahrverhalten des Reifens besonders in Kurven.

Eine Erhöhung der Dosierung des verstärkenden Füllstoffes führt zu einer Erhöhung der Härte des Vulkanisates, nachteilig ist aber die höhere Mischungsviskosität für die Verarbeitbarkeit, gleiches gilt für eine Reduktion des Weichmacheröles.

In der EP 1 134 253 werden Polyetheradditive für kieselsäurehaltige Kautschukvulkanisate beschrieben, die den o. g. Nachteil der Verminderung des Spannungswertes nicht zeigen. Allerdings benötigt der Fachmann eine Einsatzmenge von 8 Gew.-% des Produktes bezogen auf den Kautschuk, um den Shore A Härte Wert um 3 Einheiten zu erhöhen. Nachteilig ist der niedrige Spannungswerte bei 300% Dehnung.

In der EP 0 489 313 werden Additive mit guten mechanischen Eigenschaften und verbessertem Hystereseverhalten beschrieben. Die Beispiele zeigen aber nur eine geringe oder keine Erhöhung der Härte Shore A im Vergleich zum Stand der Technik, dem Bis-[-3-(triethoxysilyl)-propyl]-tetrasulfide.

Gem. DE-OS 2 255 577 und damit keine Verbesserung der Wechselwirkung zwischen Polymer und Füllstoff.

Des Weiteren wird in der EP 1 000 968 ein Bis-[-3-(triethoxysilyl)-propyl]-tetrasulfide in Kombination mit einem speziellen Reversionsschutzmittel in SBR eingesetzt, wobei die Modul 300-Werte sehr niedrig und damit unzureichend sind.

In der EP 0 791 622 B1 wird eine Kautschukzusammensetzung mit mind. einem Elastomer auf Dien-Basis, aus Kieselsäure und Ruß zusammengesetztem Füllstoff, sowie einem Kieselsäure-Kuppler ausgewählt aus
(i) Tetrathiodipropanolpolysulfid-Mischung oder
(ii) Kombination aus Tetrathiodipropanolpolysulfid und Bis(3-trialkoxysilylalkyl)polysulfid beschrieben. Insbesondere ist die Menge an Tetrathiodipropanolpolysulfid deutlich größer als die Menge an Bis(3-trialkoxysilylalkyl)polysulfid, was wirtschaftlich nicht vorteilhaft ist, da das Tetrathiodipropanolpolysulfid relativ teuer ist. Zudem zeigt diese Mischung sehr niedrige Zugfestigkeitswerte auf. Es lässt darauf schließen, dass diese Mischung zu weich ist (wie die gemessenen Shore A-Werte belegen), was sich in einem schlechteren Fahrverhalten des Reifens sowie einer Verkürzung der Lebensdauer widerspiegelt.

US 3 869 435 A offenbart thiocarbonylgruppenhaltige Polysulfide als Vernetzer für Kautschuk. US 5 717 038 A beschreibt ein Verfahren zur Herstellung von Reifenlaufflächen unter Verwendung von thiocarbonylgruppenhaltigen Polysulfiden als Vernetzer. EP 1 600 439 A1 beschreibt ein Verfahren zur Herstellung von Dithiocarbamidsäuren derivatisierten Dithiolen. Die Verwendung dieser Sulfide in kieselsäurehaltigen Kautschukmischungen ist in den obigen drei Dokumenten nicht beschrieben.

EP 0 489 313 A1, EP 0 960 906 A1, EP 0 791 624 A1, EP 1 095 974 A1, EP 1 586 563 A2 und EP 0 791 622 B1 hingegen offenbaren kieselsäurehaltigen Kautschukmischungen des Stands der Technik mit den bereits beschriebenen Nachteilen.

Aufgabe der vorliegenden Erfindung ist es, Kautschukmischungen bereitzustellen, die eine spezielle Zusatzstoffkombination aufweisen, die die Fließfähigkeit von Kautschukmischungen nicht verschlechtern und daraus hergestellte Vulkanisate mit guten Eigenschaften liefern, insbesondere im Hinblick auf Rollwiderstand, Abrieb und Naßrutschverhalten bei Reifen, gleichzeitig die Härte bzw. Steifigkeit des Vulkanisates deutlich erhöhen, was zur Verbesserung des Fahrverhaltens von Reifen führen kann.

Überraschend wurde nun gefunden, dass in Kombination mit schwefelhaltigen Alkoxysilanen bestimmte schwefelhaltige Additive die Fließfähigkeit von Kautschukmischungen nicht negativ beeinflussen und zu Vulkanisaten mit guten dynamischen Verhalten und deutlich erhöhter Härte/Steifigkeit und besonders zu weniger Abrieb führen.

Es wird vermutet, dass der synergetische Effekt aufgrund einer verbesserten Wechselwirkung zwischen Polymer und Füllstoff entsteht.

Gegenstand der Erfindung sind daher Kautschukmischungen, hergestellt aus mindestens einem Kautschuk, einem schwefelhaltigen Alkoxysilan, einem Vernetzer, einem Füllstoff, gegebenenfalls weiteren Kautschukhilfsprodukten, sowie mindestens einem Silizium-freien schwefelhaltigen Additiv der Formel (I)

A-S-(S)ₓ-S-Y-S-(S)ₓ-S-A (I)

wobei x für 0, 1 oder 2 steht,
Y für eine ggf. substituierte oder auch Heteroatome enthaltene aliphatische, cycloaliphatische oder aromatische Gruppe steht und
A für einen Rest 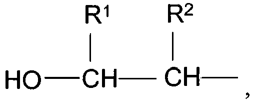 wobei R¹ bis R² gleich oder verschieden sind und Wasserstoff, C₁-C₆-Alkyl, C₅-C₆-Cycloalkyl, C₆-C₁₀-Aryl oder eine Gruppe -CH₂-OR⁵, -CH₂-CH₂-OR⁵, -NHR⁵, -COR⁵, - COOR⁵, -CH₂COOR⁵, mit R⁵ = Wasserstoff, C₁-C₆-Alkyl, C₅-C₆-Cycloalkyl, C₆-C₁₀-Aryl oder C₁-C₆-Acyl bedeuten, oder
A für einen Rest 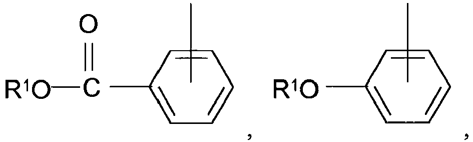 worin R¹ und R² gleich oder verschieden sind und Wasserstoff, C₁-C₆-Alkyl, C₅-C₆-Cycloalkyl, C₆-C₁₀-Aryl oder eine Gruppe -CH₂-OR⁵, -CH₂-CH₂-OR⁵, -NHR⁵, -COR⁵, - COOR⁵, -CH₂COOR⁵, mit R⁵ = Wasserstoff, C₁-C₆-Alkyl, C₅-C₆-Cycloalkyl, C₆-C₁₀-Aryl oder C₁-C₆-Acyl bedeuten, oder
A für einen Rest 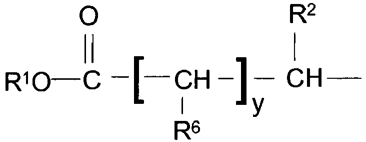 worin R¹ bis R² gleich oder verschieden sind und Wasserstoff, C₁-C₆-Alkyl, C₅-C₆-Cycloalkyl, C₆-C₁₀-Aryl oder eine Gruppe -CH₂-OR⁵, -CH₂-CH₂-OR⁵, -NHR⁵, -COR⁵, - COOR⁵, -CH₂COOR⁵, mit R⁵ = Wasserstoff, C₁-C₆-Alkyl, C₅-C₆-Cycloalkyl, C₆-C₁₀-Aryl oder C₁-C₆-Acyl bedeuten und R⁶ Wasserstoff, C₁-C₆-Alkyl, C₅-C₆-Cycloalkyl, C₆-C₁₀-Aryl oder eine Gruppe -CH₂-OR⁵, -CH₂-CH₂-OR⁵, -NHR⁵, -COR⁵, -COOR⁵, -CH₂COOR⁵, mit R⁵ = Wasserstoff, C₁-C₆-Alkyl, C₅-C₆-Cycloalkyl, C₆-C₁₀-Aryl oder C₁-C₆-Acyl bedeuten und y für 0, 1 oder 2 steht,
oder, wenn Y für -(CH₂)₆- und x für 0 steht, A für 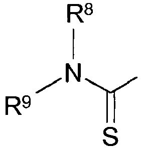 worin
R⁸ und R⁹ unabhängig voneinander für Wasserstoff, C₁-C₆-Alkyl, C₅-C₆-Cycloalkyl, C₆-C₁₀-Aryl oder eine Gruppe -CH₂-OR⁵, -CH₂-CH₂-OR⁵, -CH₂-COOR⁵, -CH₂-CH₂-COOR⁵ stehen und R⁸ und R⁹ auch ggf. zusammen mit dem jeweiligen Stickstoffatom einen Ring bilden können und R⁵ die oben genannte Bedeutung besitzt und wenigstens einer der Reste R⁸ und R⁹ ein oder mehrere Sauerstoffatome enthält.

Besonders bevorzugt steht für Y eine der Gruppen 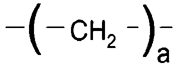 mita=2-12 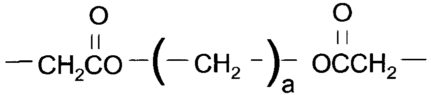 mit a = 2 - 12 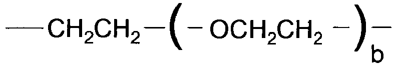 mit b = 1 - 4 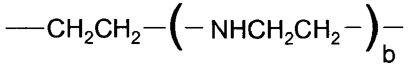 mit b = 1 - 4.

Ganz besonders bevorzugt steht Y für -(CH₂)₆-.

Die Begriffe Silizium-freies schwefelhaltiges Additiv, Polysulfid-Additiv, Silizium-freies Polysulfid Additiv und Silizium-freies Polysulfid Additiv der Formel (I) bzw. alle daraus folgenden Formeln, die in den Ansprüchen aufgeführt sind, werden als Synonyme verwendet.

Bevorzugt als Polysulfid-Additiv wird wenigstens eine der Verbindungen der Formeln (II), (III), verwendet,

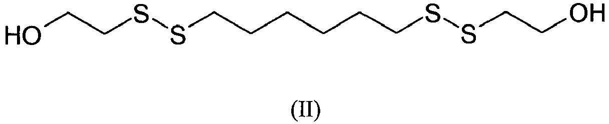

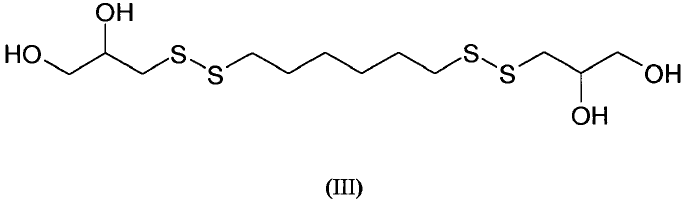

Bevorzugt als Polysulfid-Additiv wird wenigstens eine der Verbindungen der Formeln (IV), (IVa), (V), (Va), (VI), (VIa) verwendet.

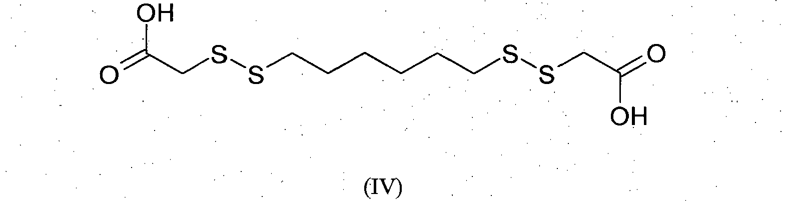

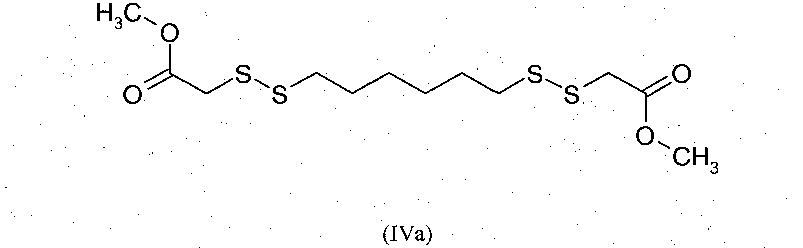

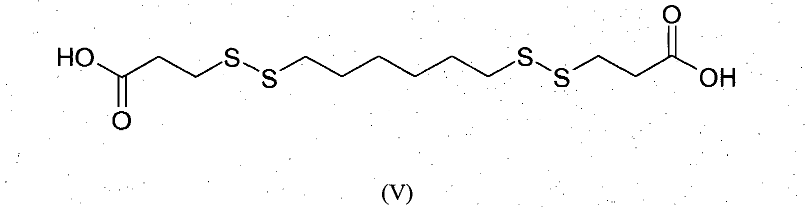

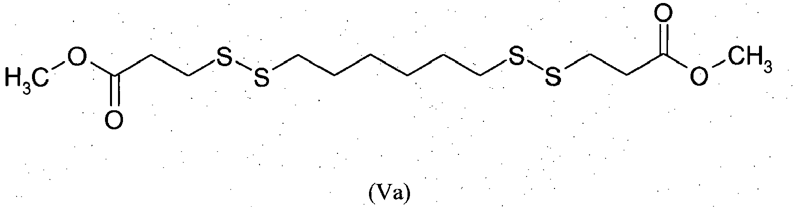

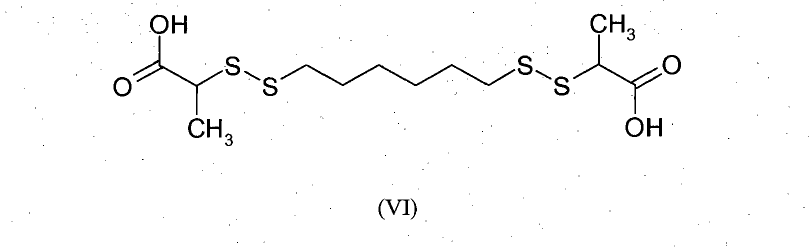

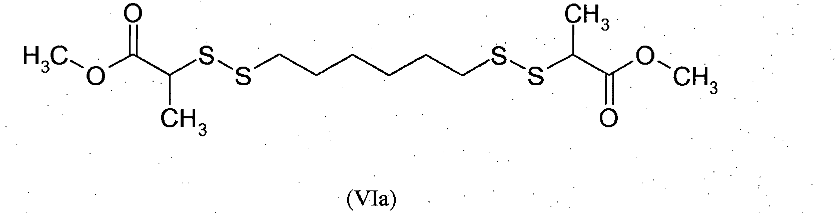

Bevorzugt als Polysulfid-Additiv wird wenigstens eine Verbindung der Formel (VII) verwendet.

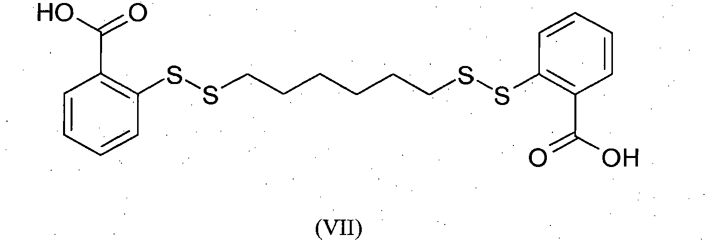

Bevorzugt als Polysulfid-Additiv wird wenigstens eine der Verbindungen der Formel (VIII) verwendet, 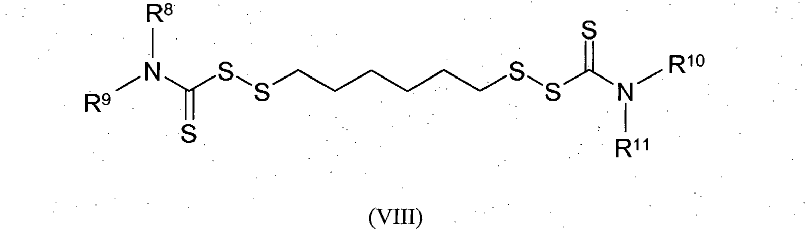 worin R⁸, R⁹, R¹⁰ und R¹¹ unabhängig voneinander für Wasserstoff, C₁-C₆-Alkyl, C₅₋C₆-Cycloalkyl, C₆-C₁₀-Aryl oder eine Gruppe -CH₂-OR⁵, -CH₂-CH₂-OR⁵, -CH₂-COOR⁵, -CH₂-CH₂-COOR⁵ stehen und R⁸ und R⁹ bzw. R¹⁰ und R¹¹ auch ggf. zusammen mit dem jeweiligen Stickstoffatom einen Ring bilden können und R⁵ die oben genannte Bedeutung besitzt und wenigstens einer der Reste R⁸, R⁹, R¹⁰ und R¹¹ eine oder mehrere Sauerstoffatome enthält.

Bevorzugt als Polysulfid-Additiv wird wenigstens eine Verbindung der Formel (IX) verwendet.

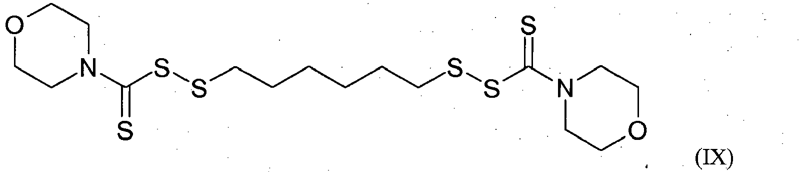

Bevorzugt als Polysulfid-Additiv wird wenigstens eine Verbindung der Formel (X) verwendet.

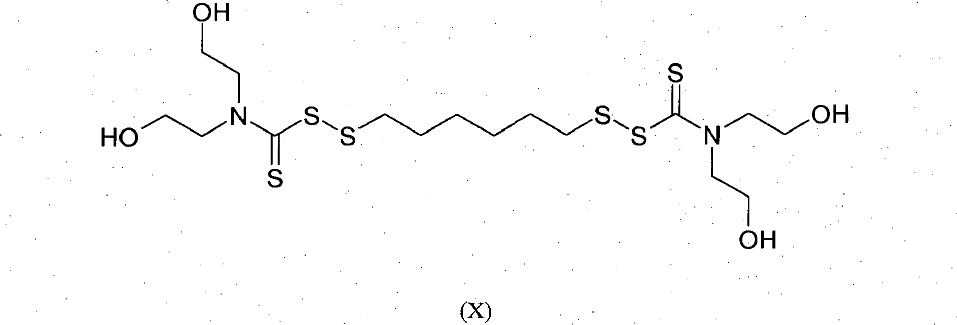

Bevorzugt als Polysulfid-Additiv wird wenigstens eine Verbindung der Formel (XI) verwendet.

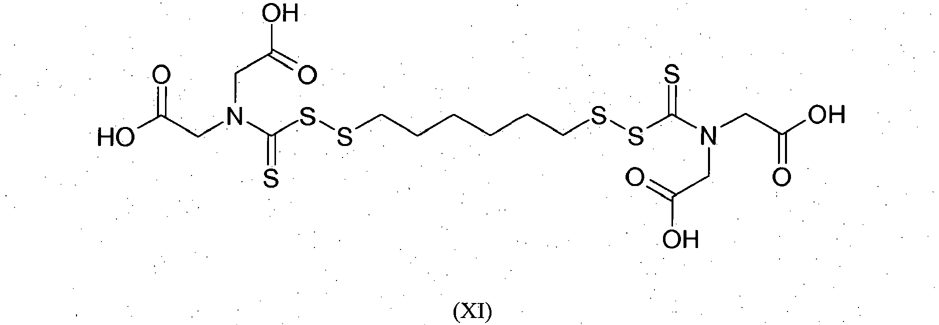

Weitere bevorzugte Polysulfid-Additive sind in den Beispielen aufgeführt.

Bevorzugt enthält die erfindungsgemäße kieselsäurehaltige Kautschukmischung mindestens einen SBR-Kautschuk und mindestens einen BR-Kautschuk.

Vorzugsweise weist sie mindestens einen SBR-Kautschuk und mindestens einen BR-Kautschuk im Gewichts-Verhältnis SBR:BR= 60:40 bis 90:10 enthält.

Zusätzlich kann sie bevorzugt mindestens einen NR-Kautschuk enthalten.

Bevorzugt weist sie wenigstens einen SBR-Kautschuk und wenigstens einen BR-Kautschuk und wenigstens einen NR-Kautschuk im Verhältnis mindestens 60 und maximal 85 Gewichtsprozente SBR bezogen auf Kautschuk und mindestens 10 und maximal 35 Gewichtsprozente BR bezogen auf Kautschuk und mindestens 5 und maximal 20 Gewichtsprozente NR bezogen auf Kautschuk auf.

Für die Herstellung der erfindungsgemäßen Kautschukmischungen und der erfindungsgemäßen Kautschukvulkanisate eignen sich neben Naturkautschuk auch Synthesekautschuke. Bevorzugte Synthesekautschuke sind beispielsweise bei W. Hofmann, Kautschuktechnologie, Genter-Verlag, Stuttgart 1980, beschreiben.

Sie umfassen u.a.
- BR-: Polybutadien
- ABR-: Butadien/Acrylsäure-C1-C4-alkylester-Copolymerisat
- CR-: Polychloropren
- IR-: Polyisopren
- SBR-: Styrol/Butadien-Copolymerisate mit Styrolgehalten von 1 - 60, vorzugsweise 20 - 50 Gew-%
- IIR-: Isobutylen/Isopren-Copolymerisate
- NBR-: Butadien(Acrylnitril-Copolymerisate mit Acrylnitrilgehalten von 5-60, vorzugsweise 10 - 50 Gew.-%
- HNBR-: teilhydrierter oder vollständig hydrierter NBR-Kautschuk
- EPDM-: Ethylen/Propylen/Dien-Copolymerisate
sowie Mischungen dieser Kautschuke.

Vorzugsweise weist die erfindungsgemäße kieselsäurehaltige Kautschukmischungen nach 0,3 bis 7 Gewichtsteile eines oder mehrerer Silizium-freien Polysulfid Additive der Formel (I) bzw. alle daraus folgenden Formel, wie in den Ansprüchen aufgeführt (im Folgenden Silizium-freie Polysulfid Additive genannt), bezogen auf 100 Gewichtsteile eingesetzten Kautschuk auf.

Bevorzugt ist die Menge an schwefelhaltigen Alkoxysilan größer oder gleich der Menge des Silizium-freien Polysulfid Additivs.

Bevorzugt wird das schwefelhaltige Alkoxysilan zum Silizium-freien Polysulfid Additiv im Gewichtsverhältnis 1,5:1 bis 20:1, besonders bevorzugt 5:1 bis 15:1 eingesetzt.

Die erfindungsgemäße Kautschukmischung enthält vorzugsweise 0,5 bis 5 Gew.-Teile, bezogen auf 100 Gewichtsteile an eingesetztem Kautschuk eines Silizium-freien Polysulfid Additives.

Ein weiterer Gegenstand der vorliegenden Erfindung sind Kautschukvulkanisate, die sich aus den erfindungsgemäßen Kautschukmischungen herstellen lassen.

Ein weiterer Gegenstand der vorliegenden Erfindung ist ein Verfahren zur Herstellung von gefüllten Kautschukvulkanisaten, das dadurch gekennzeichnet ist, dass man
i) mindestens einem Kautschuk mit
ii) 10 - 150, vorzugsweise 30 - 120 Gew.-%, bezogen auf Kautschuk (i), Füllstoff und
iii) 0,1 - 15, vorzugsweise 0,3 - 7 Gew.-%, bezogen auf Kautschuk (i), Silizium-freie Polysulfid Additive
bei Massetemperaturen von mindestens 120°C und bei Scherraten von 1 - 1000 sec (exp.-1), bevorzugt 1 - 100 sec (exp.-1), mischt und anschließend nach Zugabe weiterer Vulkanisationschemikalien in üblicher Weise vulkanisiert.

Die Zugabe der erfindungsgemäßen Silizium-freie Polysulfid Additive erfolgt bevorzugt im ersten Teil des Mischprozesses bei Massetemperaturen von 100 - 200 °C bei den erwähnten Scherraten, sie kann jedoch auch später bei tieferen Temperaturen (40 - 100°C) z.B. zusammen mit Schwefel und Beschleuniger erfolgen.

Die Silizium-freie Polysulfid Additive können sowohl in reiner Form als auch aufgezogen auf inerten, organischen oder anorganischen Trägern dem Mischprozeß zugeben werden. Bevorzugte Trägermaterialien sind Kieselsäure, natürliche oder synthetische Silikate, Aluminiumoxid und/oder Russe.

Als kieselsäurehaltige Füllstoffe im Sinne dieser Erfindung kommen für die erfindungsgemäßen Kautschukmischung und Kautschukvulkanisate folgende Füllstoffe in Frage:
- hochdisperse Kieselsäure, hergestellt z.B. durch Fällung von Lösungen von Silikaten oder Flammenhydrolyse von Siliziumhalogeniden mit spezifischen Oberflächen von 5 - 1000, vorzugsweise 20 - 400 m²/g (BET-Oberfläche) und mit Primärteilchengrößen von 10 - 400 nm. Die Kieselsäuren können gegebenenfalls auch als Mischoxide mit anderen Metalloxiden wie Al-, Mg-, Ca-, Ba-, Zn-, Zr-, Ti-Öxiden vorliegen.
- Synthetische Silikate, wie Aluminiumsilikat, Erdalkalisilikate wie Magnesium- oder Calciumsilikat, mit BET-Oberflächen von 20 - 400 m²/g und Primärteilchengröße von 10 - 400 nm,
- Natürliche Silikate, wie Kaolin und andere natürliche vorkommende Kieselsäuren,
- Glasfasern und Glasfaserprodukte (Matten, Stränge) oder Mikroglaskugeln.

Als weitere Füllstoffe können Russe verwendet werden. Die hierbei zu verwendenden Russe sind z.B. nach dem Flammruß, Furnace- oder Gasruß-Verfahren hergestellt und besitzen BET-Oberflächen von 20 - 200 m²/g, wie SAF-, ISAF-, IISAF-, HAF-, FEF-, oder GPF-Russe.

Die Silizium-freie Polysulfid Additive werden bevorzugt in Mengen von 0,3 bis 7 % bezogen auf Kautschuk, in den erfindungsgemäßen Kautschukmischungen eingesetzt.

Eine besonders bevorzugte Variante besteht in der Kombination von Kieselsäure, Ruß und Silizium-freie Polysulfid Additive. Bei dieser Kombination kann das Verhältnis von Kieselsäure zu Ruß in beliebigen Grenzen variiert werden. Aus reifentechnischer Sicht werden Kieselsäure:Ruß-Verhältnis von 20 : 1 bis 1,5 : 1 bevorzugt.

Als schwefelhaltige Silane für die erfindungsgemäße Kautschukvulkanisate kommen bevorzugt Bis-(triethoxysilylpropyl)-tetrasulfan und das -disulfan sowie 3-Triethoxysilyl)-1-propanthiol oder Silane wie Si 363 der Evonik, Deutschland oder Silan NXT bzw. NXT Z der Momentive (früher GE, USA), wobei der Alkoxy-Rest Methoxy oder Ethoxy bedeutet in Einsatzmengen von 2 bis 20 Gew.-Teilen, bevorzugt 3-11 Gew.-Teilen jeweils berechnet als 100%iger Wirkstoff und bezogen auf 100 Gew.-Teile Kautschuk, in Frage. Es können aber auch Mischungen aus diesen schwefelhaltigen Silanen eingesetzt werden. Flüssige Schwefelhaltige Silane können zur besseren Dosierbarkeit und/oder Dispergierbarkeit auf einem Träger aufgezogen sein (dry liquid). Der Wirkstoffgehalt liegt zwischen 30 und 70 Gew.-Teilen, bevorzugt 40 und 60 Gew.-Teilen je 100 Gew.-Teile dry liquid.

Die erfindungsgemäßen Kautschukvulkanisate können weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol, die der Gummiindustrie bekannt sind.

Die Kautschukhilfsprodukte werden in üblicher Menge, die sich u.a. nach dem Verwendungszweck der Vulkanisate richten, eingesetzt. Übliche Mengen sind 0,1 bis 30 Gew.-%, bezogen auf Kautschuk.

Als Vernetzungsmittel werden eingesetzt Peroxide, Schwefel, Magnesiumoxid, Zinkoxid, denen noch die bekannten Vulkanisationsbeschleuniger, wie Merkaptobenzothiazole, -sulfenamide, Thiurame, Thiocarbamate, Guanidine, Xanthogenate und Thiophosphate zugesetzt werden können. Bevorzugt ist Schwefel.

Die Vernetzungsmittel und Vulkanisationsbeschleuniger werden in Mengen von ca. 0,1 bis 10 Gew-%, bevorzugt 0,1 bis 5 Gew-%, bezogen auf Kautschuk, eingesetzt.

Wie bereits oben erwähnt, ist es gegen die Einwirkung von Wärme und Sauerstoff vorteilhaft Alterungsschutzmittel der Kautschukmischung hinzuzugeben. Geeignete phenolische Alterungsschutzmittel sind alkylierte Phenole, styrolisiertes Phenol, sterisch gehinderte Phenole wie 2,6-Di-tert.-Butylphenol, 2,6-Di-tert-Butyl-p-Kresol (BHT), 2,6-Di-tert.-Butyl-4-Ethylphenol, estergruppenhaltige sterisch gehinderte Phenole, thioetherhaltige sterisch gehinderte Phenole, 2,2'-Methylen-bis-(4-Methyl-6-tert-Butylphenol) (BPH) sowie sterisch gehinderte Thiobisphenole.

Falls eine Verfärbung des Kautschuks ohne Bedeutung ist, werden auch aminische Alterungsschutzmittel z. B. Mischungen aus Diaryl-p-phenylendiaminen (DTPD), octyliertes Diphenylamin (ODPA), Phenyl-α-Naphthylamin (PAN), Phenyl-β-Naphthylamin (PBN), vorzugsweise solche auf Phenylendiaminbasis eingesetzt. Beispiele für Phenylendiamine sind N-Isopropyl-N'-phenyl-p-Phenylendiamin, N-1,3-Dimethylbutyl-N'-Phenyl-p-Phenylendiamin (6PPD), N-1,4-Dimethylpentyl-N'-phenyl-p-Phenylendiamin (7PPD), N,N'-bis-1,4-(1,4-Dimethylpentyl)-p-Phenylendiamin (77PD) sind.

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im allgemeinen in Kombination mit phenolischen Alterungsschutzmitteln eingesetzt. TMQ, MBI und MMBI werden vor allem für NBR-Typen verwendet, die peroxidisch vulkanisiert werden.

Die Ozonbeständigkeit kann durch dem Fachmann bekannte Antioxidantien verbessert werden wie bespielsweise N-1,3-Dimethylbutyl-N'-Phenyl-p-Phenylendiamin (6PPD), N-1,4-Dimethylpentyl-N'-phenyl-p-Phenylendiamin (7PPD), N,N'-bis-1,4-(1,4-Dimethylpentyl)-p-Phenylendiamin (77PD), Enol Ether oder cyclische Acetale.

Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel kann die erfindungsgemäße Kautschukmischung alle für die Verarbeitung von Kunststoffen üblichen Gleitmittel enthalten, wie beispielsweise Kohlenwasserstoffe, wie Öle, Paraffine und PE-Wachse, Fettalkohole mit 6 bis 20 C- Atomen, Ketone, Carbonsäuren, wie Fettsäuren und Montansäuren, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Die Vernetzung der Kautschukmischung kann sowohl mit Schwefel-Beschleuniger Systemen als auch mit Peroxiden erfolgen.

Als Vernetzer kommen z.B. peroxidische Vernetzer in Frage wie Bis(2,4-dichlorbenzyl)peroxid, Dibenzoylperoxid, Bis(4-chlorbenzoyl)peroxid, 1,1-Bis(t-butylperoxy)-3,3,5-trimethylcylohexan, tert-Butylperbenzoat, 2,2-Bis(t-butylperoxy)buten, 4,4-Di-tert-butyl peroxynonylvalerat, Dicumylperoxid, 2,5-Dimethyl-2,5-di(tert-butylperoxy)hexan, tert-Butylcumylperoxid, 1,3-Bis(t-butylperoxyisopropyl) benzol, Di-tert-butylperoxid und 2,5-Dimethyl-2,5-di(tert-butylperoxy)hexyn-3.

Es kann vorteilhaft sein, neben diesen peroxidischen Vernetzern noch weitere Zusätze zu verwenden, mit deren Hilfe die Vernetzungsausbeute erhöht werden kann: Hiefür sind beispielsweise Triallylisocyanurat, Triallylcyanurat, Trimethylolpropantri(meth)acrylat, Triallyltrimellithat, Ethylenglycoldimethacrylat, Butandioldimethacrylat, Trimetylolpropantrimethacrylat, Zn-diacrylat, Zn-dimethacrylat, 1,2-Polybutadien oder N,N'-m-Phenylendimaleinimid geeignet.

Als Vernetzer kann auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Kautschukmischungs ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Als Zusätze, mit deren Hilfe die Vernetzungsausbeute erhöht werden kann, eignen sich z.B. Dithiocarbamate, Thiurame, Thiazole, Sulfenamide, Xanthogenate, bi- oder polycyclische Amine, Guanidinderivate, Dithiophosphate, Caprolactame und Thioharnstoffderivate.

Ebenso als Zusätze geeignet sind beispielsweise: Zinkdiamindiisocyanat, Hexamethylentetramin, 1,3-Bis(citraconimidomethyl)benzol sowie zyklische Disulfane.

In der erfindungsgemäßen Kautschukmischung wird das Schwefel-Beschleuniger-System bevorzugt.

Um die Entflammbarkeit zu vermindern und die Rauchentwicklung beim Verbrennen zu verringern, kann die erfindungsgemäße Kautschukmischungszusammensetzung auch Flammschutzmittel enthalten. Als Flammschutzmittel werden beispielsweise Antimontrioxid, Phosphorsäureester, Chlorparaffin, Aluminiumhydroxid, Borverbindungen, Zinkverbindungen, Molybdäntrioxid, Ferrocen, Calciumcarbonat oder Magnesiumcarbonat verwendet.

Das Kautschukvulkanisat kann auch weitere Kunststoffe enthalten, die beispielsweise als polymere Verarbeitungshilfsmittel oder Schlagzähigkeitsverbesserer wirken. Diese Kunststoffe werden ausgewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C1-bis C10-Alkoholen. Zu nennen sind insbesondere Polyacrylate mit gleichen oder verschiedenen Alkoholresten aus der Gruppe der C4- bis C8-Alkohole, besonders des Butanols, Hexanols, Octanols und 2-Ethylhexanols, Polymethylmethacrylat, Methyl-methacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere.

Das erfindungsgemäße Kautschukvulkanisat kann zur Herstellung von Schaumstoffen verwendet werden. Dazu werden ihr chemisch oder physikalisch wirkende Treibmittel zugefügt. Als chemisch wirkende Treibmittel kommen alle für diesen Zweck bekannten Substanzen in Betracht, wie beispielsweise Azodicarbonamid, p-Toluolsulfonylhydrazid, 4,4'-Oxybis(benzolsulfohydrazid), p-Toluolsulfonylsemicarbazid, 5-Phenyltetrazol, N,N'-Dinitroso-pentamethylentetramin, Zinkcarbonat oder Natriumhydrogencarbonat sowie diese Substanzen enthaltende Mischungen. Als physikalisch wirkende Treibmittel sind beispielsweise Kohlendioxid oder Halogenkohlenwasserstoffe geeignet.

Die Vulkanisation kann bei Temperaturen von 100 - 200 °C, vorzugsweise 130 - 180 °C, gegebenenfalls unter einem Druck von 10 - 200 bar erfolgen.

Die Abmischungen des Kautschuks mit dem Füllstoff und den schwefelhaltigen Additiven der Formel (I) kann in üblichen Mischaggregaten, wie Walzen, Innenmischer und Mischextruder, durchgeführt werden.

Die erfindungsgemäßen Kautschukvulkanisate eignen sich zur Herstellung von Formkörpern mit verbesserten Eigenschaften, z.B. für die Herstellung von Kabelmäntel, Schläuchen, Treibriemen, Förderbändern, Walzenbelägen, Reifen, Schuhsohlen, Dichtungsringe und Dämpfungselemente.

Bei der Verarbeitung von Kautschuken ist es wichtig, dass die zunächst zubereitete Kautschukmischung mit den Additiven eine niedrige Fließviskosität (Mooney Viskosität ML 1+4/100°C) hat, damit sie leicht verarbeitet werden kann. In vielen Anwendungen soll die anschließende Vulkanisation (beispielsweise bei 170°C, t95) der Kautschukmischung unter Wärmeeinfluss möglichst schnell ablaufen, um so den Zeit- und Energieaufwand zu begrenzen.

Je nach Formgebung soll die Anvulkanisationszeit (beispielsweise t5) relativ lang sein.

Vorzugsweise weist ein aus der erfindungsgemäßen Kieselsäurehaltigen Kautschukmischung bei 170°C/t95 geheiztes, hergestelltes Vulkanisat einen Verlustfaktor tan delta bei 60°C von < 0,2 und gleichzeitig eine Härte Shore A bei 23°C von > 67 auf, besonders bevorzugt einen Verlustfaktor tan delta bei 60°C von < 0,17 und gleichzeitig eine Härte Shore A bei 23°C von > 70. Das Vulkanisat weist einen Modul 300-Wert von > 12 MPa, vorzugsweise > 15 MPa auf.

Vorzugsweise weist ein aus der kieselsäurehaltigen Kautschukmischung bei 170°C/t95 geheiztes, hergestelltes Vulkanisat einen Verlustfaktor tan delta bei 60°C von kleiner 0,17 und gleichzeitig eine Anvulkanisationszeit von größer 1000 Sekunden auf.

Vorzugsweise weist ein aus der kieselsäurehaltigen Kautschukmischung bei 170°C/t95 geheiztes, hergestelltes Vulkanisat einen Verlustfaktor tan delta bei 60°C von kleiner 0,17 und gleichzeitig eine Ausvulkanisationszeit von kleiner 2000 Sekunden auf.

Vorzugsweise weist ein aus der kieselsäurehaltigen Kautschukmischung bei 170°C/t95 geheiztes, hergestelltes Vulkanisat eine Anvulkanisationszeit von größer 1000 Sekunden und gleichzeitig eine Ausvulkanisationszeit von kleiner 2000 Sekunden auf.

Die Mischungsviskosität ML 1+4 bei 100°C der kieselsäurehaltigen Kautschukmischung ist bevorzugt kleiner 150, bevorzugt kleiner 100, besonders bevorzugt kleiner 95.

Eine weitere Erfindung ist die Verwendung der erfindungsgemäßen kieselsäurehaltigen Kautschukmischung zur Herstellung von Vulkanisaten und Kautschukformkörper aller Art, insbesondere zur Herstellung von Reifen und Reifenbauteilen.

Spätestens seit sich die Europäische Union mit den Grenzwerten für den Kohlendioxidausstoß durch Pkws befasst, suchen die Automobilhersteller nach wirtschaftlichen Möglichkeiten, um die Zielmarke von höchstens 130 g/km CO2-Emission zu erreichen. Wesentliche Bedeutung kommt dabei rollwiderstandsarmen Reifen zu. Sie leisten beim Abrollen weniger Verformungsarbeit und senken deshalb den Kraftstoffverbrauch.

Damit die Verminderung des Rollwiderstands nicht auf Kosten anderer wichtiger Eigenschaften geschieht, werden zugleich auch die Anforderungen an die Nasshaftung und das Rollgeräusch festgelegt. Einen ersten Hinweis auf Nassrutschverhalten und Rollwiderstand gibt der Verlustfaktor tan delta. Bei 0 °C sollte dieser möglichst hoch sein (gute Nassrutschfestigkeit), bei 60 bis 70 °C möglichst niedrig (niedriger Rollwiderstand). Die Härte eines Kautschukvulkanisates gibt einen ersten Hinweis über dessen Steifigkeit wieder.

### Beispiele

### Beispiel 1

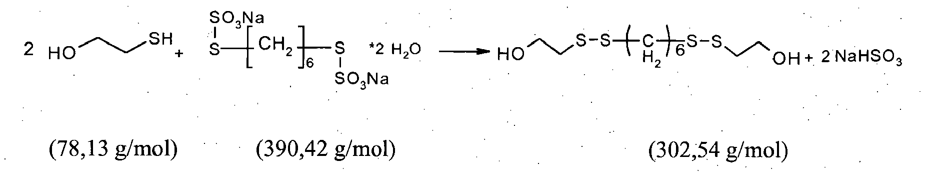

Apparatur: 2000ml Vierhalskolben mit Thermometer, Tropftrichter mit Druckausgleich, Rückflusskühler mit Gasableitungsansatz (Blasenzähler) und Schlauch, Rührwerk

| | | | |
|---|---|---|---|
| Vorlage: | 79,3 g = | 0,2 mol | Duralink HTS von Flexsys (98,48%) |
| | 480 ml | | vollentsalztes Wasser |
| | 33,6 g = | 0,4 mol | Natriumhydrogencarbonat |
| | 32,5 g = | 0,4 mol | Formaldehydlösung, ca. 37%ig |
| | 960 ml | | Toluol |
| Zulauf: | 31,6 g = | 0,4 mol | 2-Mercaptoethanol (Aldrich, ≥ 99%) |

In die mit Stickstoff gespülte Apparatur wird Duralink HTS und Wasser vorgelegt. Der Rührer wird eingeschaltet, dann wird erst Natriumhydrogencarbonat und danach Formaldehyd und Toluoyl zugegeben.

Dann wird bei einer Reaktionstemperatur von 20-25°C 2-Mercaptoethanol unter Stickstoffüberleitung innerhalb von ca. 30 min zugetropft.

Nach beendeter Dosierung wird bei 20-25°C über Nacht nachgerührt. Der Ansatz wird in einen 21-Scheidetrichter überführt. Nach Zusatz von 8,8g Natriumchlorid lassen sich die Phasen trennen. Die wässrige Phase wird noch zweimal mit je 300 ml Toluol extrahiert. Die vereinigten organischen Phasen werden dreimal mit je 300 ml VE-Wasser extrahiert, über Natriumsulfat getrocknet und abfiltriert.

Das Produkt wird bei -6°C ausgefroren, über D4-Fritte isoliert und bei 25°C im Vakuumtrockenschrank getrocknet

Ausbeute: 30,2 g (50%) der idealisierten Formel

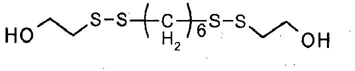

### Beispiel 2

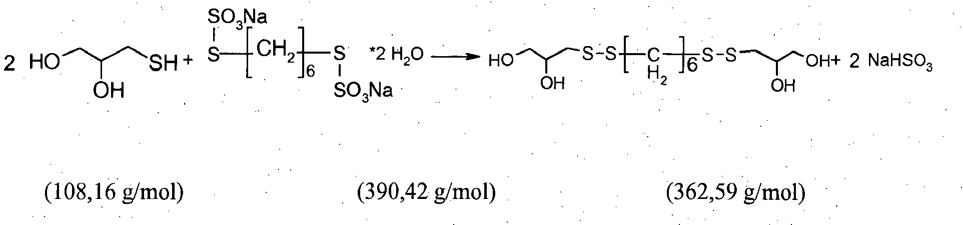

### Ansatzgröße: 0,25 mol

Apparatur: 2000ml Vierhalskolben mit Thermometer, Tropftrichter mit Druckausgleich, Rückflusskühler mit Gasableitungsansatz (Blasenzähler) und Schlauch, Rührwerk mit 250 Upm, pH-Meter

| | | | | | |
|---|---|---|---|---|---|
| Vorlage: | 99,1 | g | = | 0,25 mol | Duralink HTS von Flexsys (98,48%) |
| | 600 | ml | | | vollentsalztes Wasser |
| | 42 | g | = | 0,5 mol | Formaldehydlösung, ca. 37%ig |
| | 42 | g | = | 0,5 mol | Natriumhydrogencarbonat |
| | 50 | ml | | | Toluol |
| Zulauf: | 54,4 | g | = | 0,5 mol | Thioglycerin (99,4%, Fa. Bruno Bock) |

In die mit Stickstoff gespülte Apparatur werden Duralink HTS und Wasser vorgelegt. Der Rührer wird eingeschaltet, dann werden erst Natriumhydrogencarbonat und danach Formaldehyd und anschließend das Toluol zugegeben.

Nun wird bei einer Reaktionstemperatur von 20 bis 25°C das Thioglycerin unter Stickstoffüberleitung innerhalb von ca. 30 min zugetropft. Nach beendeter Dosierung werden 200 ml VE Wasser nachgesetzt, um die Rührbarkeit zu verbessern. Dann wird 22 h bei 20 bis 25 °C nachgerührt und der Feststoff anschließend mittels D4-Fritte abgesaugt. Danach wird das Produkt sechsmal mit je 500 ml vollentsalztem Wasser gewaschen (Leitfähigkeit <0,3 Milli-Siemens). Das Produkt wird anschließend bei 25°C im Vakuumtrockenschrank bis zur Gewichtskonstanz getrocknet.

Ausbeute: 80,4 g (90,6%) der idealisierten Formel

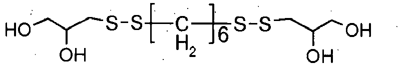

### Beispiel 3

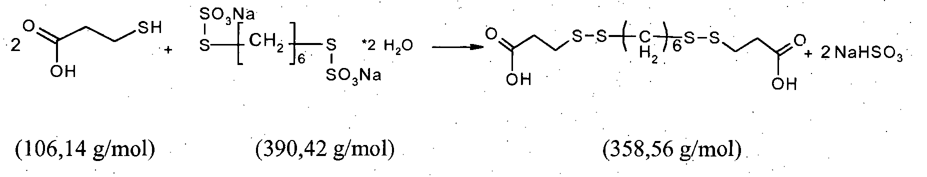

Apparatur: 2000ml Vierhalskolben mit Thennometer, Tropftrichter mit Druckausgleich, Rückflusskühler mit Gasableitungsansatz (Blasenzähler) und Schlauch, Rührwerk mit 250 Upm, Dulcometer

| | | | |
|---|---|---|---|
| Vorlage: | 88,6 g | = 0,22 mol | Duralink HTS von Flexsys |
| | 600 ml | | vollentsalztes Wasser |
| | 42 g | = 0,5 mol | Formaldehydlösung, ca. 37%ig |
| | 42 g | = 0,5 mol | Natriumhydrogencarbonat |
| Zulauf: | 53,61 g | = 0,5 mol | 3-Mercaptopropionsäure (Aldrich, ≥ 99%) |
| Hilfsmittel: | | | 15%ige NaOH |
| | | | 37%ige HCl |

In die mit Stickstoff gespülte Apparatur wird Duralink HTS und Wasser vorgelegt. Der Rührer wird eingeschaltet, dann werden erst Natriumhydrogencarbonat und danach Formaldehyd zugegeben.

Nun wird bei einer Reaktionstemperatur von 20 -25°C die 3-Mercaptopropionsäüre unter Stickstoffüberleitung innerhalb von ca. einer 1h zugetropft. Der pH-Wert wird während der Reaktion mit 15 %iger NaOH mittels Dulcometer bei pH 8 (± 0,2) gehalten.

Nach beendeter Dosierung wird unter Stickstoffüberleitung unter Kühlung bei 22 (± 1) °C der pH-Wert mit 37%iger Salzsäure auf pH 2 eingestellt.

Anschließend wird die Reaktionssuspension mittels D4-Fritte abgesaugt. Danach wird das Produkt 6 x mit je 300 ml vollentsalztem Wasser gewaschen (Leitfähigkeit <0,3 Milli-Siemens). Das Produkt wird bei 25°C im Vakuumtrockenschrank bis zur Gewichtskonstanz getrocknet.

Ausbeute: 50,8 g (64,4%) der idealisierten Formel

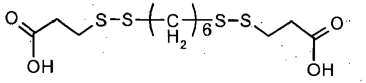

### Beispiel 4

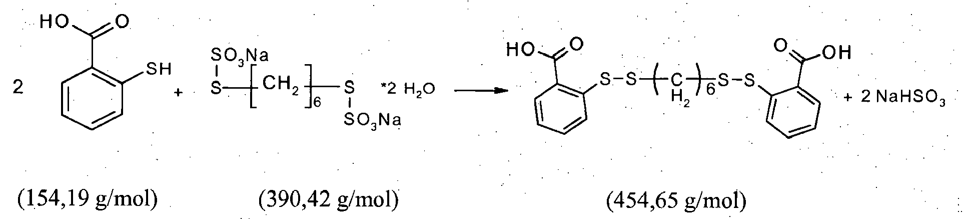

Apparatur: 2000ml Vierhalskolben mit Thermometer, Tropftrichter mit Druckausgleich, Rückflusskühler mit Gasableitungsansatz (Blasenzähler) und Schlauch, Rührwerk, Gaseinleitungsrohr

| | | | | | |
|---|---|---|---|---|---|
| Vorlage: | 99,1 | g | = | 0,25 mol | Duralink HTS von Flexsys (98,48%) |
| | 600 | ml | | | vollentsalztes Wasser |
| | 41,1 | g | = | 0,5 mol | Formaldehydlösung, ca. 36,5%ig |
| | 42 | g | = | 0,5 mol | Natriumhydrogencarbonat |
| Zulauf: | 78,7 | g | = | 0,5 mol | 2-Mercaptobenzoesäure (98%), unter Stickstoff gelöst in 500 ml Wasser bei pH 8 durch NaOH-Zugabe |
| Hilfsmittel: | | | | | 37%ige HCl |

In die mit Stickstoff gespülte Apparatur wird Duralink HTS und Wasser vorgelegt. Der Rührer wird eingeschaltet, dann werden erst Natriumhydrogencarbonat und danach Formaldehyd zugegeben.

Nun wird bei einer Reaktionstemperatur von 20 - 25°C die 2-Mercaptobenzoesäure-Natriumsalz-Lösung unter Stickstoffüberleitung innerhalb von ca. einer 1h zugetropft. Nach beendeter Dosierung wird 22h nachgerührt und dann unter Stickstoffüberleitung bei 20 - 25 °C der pH-Wert mit 37%iger Salzsäure auf pH 2 eingestellt.

Es wird noch eine Stunde nachgerührt und der Feststoff anschließend mittels D4-Fritte abgesaugt. Danach wird das Produkt mit je 300 ml vollentsalztem Wasser gewaschen (Leitfähigkeit <0,3 Milli-Siemens). Das Produkt wird anschließend bei 25°C im Vakuumtrockenschrank bis zur Gewichtskonstanz getrocknet.

Ausbeute: 113,3 g (99,7%) einer Polysulfid-Mischung der idealisierten Formel

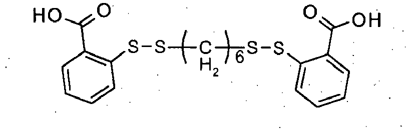

### Beispiel 5:

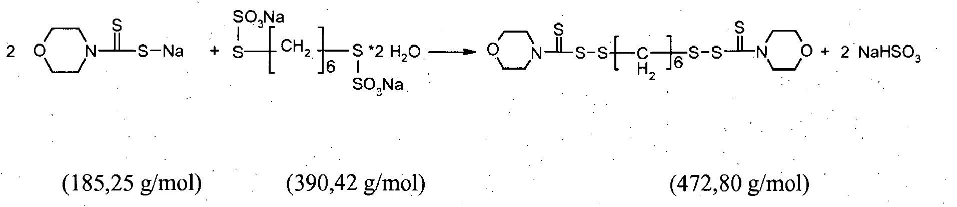

| | | | | | |
|---|---|---|---|---|---|
| Apparatur: | 2000ml Vierhalskolben mit Thermometer, Tropftrichter mit Druckausgleich, Rückflusskühler mit Gasableitungsansatz (Blasenzähler) und Schlauch, Rührwerk, pH-Meter | | | | |
| Vorlage: | 79,6 | g | = | 0,2 mol | Duralink HTS von Flexsys (98,14%) |
| | 272 | ml | | | vollentsalztes Wasser |
| | 32,9 | g | = | 0,4 mol | Formaldehydlösung, ca. 36,5%ig |
| | 33,6 | g | = | 0,4 mol | Natriumhydrogencarbonat |
| | 40 | ml | | | Toluol |
| Zulauf: | 791,7 | g | = | 0,4 mol | Morpholindithiocarbonsäure Na-Salz (11,7%) |

In die mit Stickstoff gespülte Apparatur werden Duralink HTS und Wasser vorgelegt. Der Rührer wird eingeschaltet, dann werden erst Natriumhydrogencarbonat, danach Formaldehyd und anschließend das Toluol zugegeben.

Nun wird bei einer Reaktionstemperatur von 20 bis 25°C Morpholindithiocarbonsäure Nu-salz (wässrige Lösung) unter Stickstofüberleitung innerhalb von ca. 30 min zugetropft. Nach beendeter Dosierung wird 22 h bei 20 bis 25 °C nachgerührt und der Feststoff anschließend mittels D4-Fritte abgesaugt. Danach wird das Produkt viermal mit je 300 ml vollentsalztem Wasser gewaschen (Leitfähigkeit <0,3 Milli-Siemens). Das Produkt wird anschließend bei 35°C im Vakuumtrockenschrank bis zur Gewichtskonstanz getrocknet.

Ausbeute: 35,9 g (38%) der idealisierten Formel

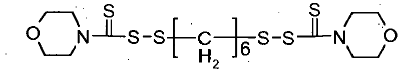

### Ergebnisse:

Anhand der nachfolgenden Beispiele wird die Erfindung näher erläutert, ohne dass dadurch eine Einschränkung der Erfindung bewirkt werden soll.

Für die Prüfungen wurden folgende Kautschuk-Rezepturen gewählt, die in Tabelle 1 aufgeführt sind. Alle Zahlenangaben, sofern nichts anderes vermerkt, beziehen sich auf "parts per hundred rubber" (phr).

In einem 1,5L Innenmischer (70UpM), Starttemperatur 80°C, Mischzeit: 5 Minuten, wurden die nachfolgenden Kautschukmischungen hergestellt. Schwefel und Beschleuniger wurden zum Schluss auf einer Walze (Temperatur: 50°C) zugemischt.

**Tabelle 1: Kautschuk-Rezeptur**

| | Referenz | Bsp. 1 | Bsp. 2 | Bsp. 3 | Bsp. 4 | Bsp. 5 |
|---|---|---|---|---|---|---|
| BUNA CB 24 (ölverstreckter Kautschuk der Lanxess Deutschland GmbH) | 30 | 30 | 30 | 30 | 30 | 30 |
| BUNA VSL 5025-1 (Lanxess Deutschland GmbH) | 96 | 96 | 96 | 96 | 96 | 96 |
| CORAX N 339 (handelsüblicher Ruß) | 6,4 | 6,4 | 6,4 | 6,4 | 6,4 | 6,4 |
| VULKASIL S (gefällte Kieselsäure der Lanxess Deutschland GmbH) | 80 | 80 | 80 | 80 | 80 | 80 |
| TUDALEN 1849-1 (Mineralöl) | 8 | 8 | 8 | 8 | 8 | 8 |
| EDENOR C 18 98-100 | 1 | 1 | 1 | 1 | 1 | 1 |
| VULKANOX 4020/LG | 1 | 1 | 1 | 1 | 1 | 1 |
| VULKANOX HS/LG | 1 | 1 | 1 | 1 | 1 | 1 |
| ZINKWEISSROTSIEGEL | 2,5 | 2,5 | 2,5 | 2,5 | 2,5 | 2,5 |
| ANTILUX 654 | 1,5 | 1,5 | 1,5 | 1,5 | 1,5 | 1,5 |
| SI 69 | 6,4 | 6,4 | 6,4 | 6,4 | 6,4 | 6,4 |
| VULKACIT D/C | 2 | 2 | 2 | 2 | 2 | 2 |
| VULKACIT CZ/C | 1,5 | 1,5 | 1,5 | 1,5 | 1,5 | 1,5 |
| MAHLSCHWEFEL 90/95 CHANCEL | 1,5 | 1,5 | 1,5 | 1,5 | 1,5 | 1,5 |
| Beispiel 1 | | 1 | | | | |
| Beispiel 2 | | | 1 | | | |
| Beispiel 3 | | | | 1 | | |
| Beispiel 4 | | | | | 1 | |
| Beispiel 5 | | | | | | 1 |

**Tabelle 2: Zusammenstellung der Ergebnisse**

| Parameter | Einheit | DIN | Referenz | Bsp. 1 | Bsp. 2 | Bsp. 3 | Bsp. 4 | Bsp. 5 |
|---|---|---|---|---|---|---|---|---|
| | | | | | | | | |
| Mooney Viskosität (ML 1+4) | [ME] | 53523 | 95 | 90 | 86 | 94 | 89 | 83 |
| Mooney Anvulkanisation bei 130°C (t5) | sec | acc. to ASTM D 5289-95 | 1253 | 1060 | 638 | 1573 | 1495 | 1305 |
| Ausvulkanisation bei 170°C / t95 | s | 53529 | 1417 | 1520 | 1320 | 1798 | 1588 | 1369 |
| Shore A Härte bei 23°C | [Shore A] | 53505 | 66 | 67 | 67 | 69 | 72 | 68 |
| Modul 300 | MPa | 53504 | 15 | 15 | 16 | 15 | 15 | 15 |
| Bruchdehnung | % | 53504 | 349 | 361 | 361 | 384 | 338 | 371 |
| Zugfestigkeit | MPa | 53504 | 19 | 19 | 20 | 21 | 18 | 20 |
| Abrieb | mm³ | 53516 | 74 | 85 | 83 | 80 | 76 | 82 |
| Nassrutschverhalten (tan d (0°C)) | - | | 0,463 | 0,351 | 0,393 | 0,432 | 0,407 | 0,433 |
| Rollwiderstand (tan d (60 °C)) | - | | 0,133 | 0,151 | 0,146 | 0,151 | 0,145 | 0,146 |

Wie die Ergebnisse in Tabelle 2 zeigen, konnte überraschend gefunden werden, dass bei alle Beispielen eine höhere Härte (Shore A) im Vergleich zur Referenz gemessen wurde. Die mechanischen Eigenschaften wie Zugfestigkeit, Bruchdehnung und Modul 300 blieben dabei nahezu unverändert. Alle getesteten Vulkanisate zeigen ein vergleichbares gutes Nassrutschverhalten und vergleichbaren guten Rollwiderstand zur Referenz (tan delta bei 0°C > 0,35 und tan delta bei 60°C < 0,2) und ebenfalls sehr vorteilhafte Abriebwerte (< 100 mm³).

### Prüfungen der Kautschukmischung und der Vulkanisate:

### Mooney-Viskositätsmessung:

Die Viskosität lässt sich aus der Kraft, die Kautschuke (und Kautschukmischungen) ihrer Verarbeitung entgegensetzen, direkt bestimmen. Beim Scherscheibenviskosimeter nach Mooney wird eine geriffelte Scheibe oben und unten mit Probensubstanz umschlossen und in einer beheizbaren Kammer mit etwa zwei Umdrehungen in der Minute bewegt. Die hierzu erforderliche Kraft wird als Drehmoment gemessen und entspricht der jeweiligen Viskosität. Die Probe wird in der Regel eine Minute lang auf 100°C vorgewärmt; die Messung dauert weitere 4 Minuten, wobei die Temperatur konstant gehalten wird."

Die Viskosität wird zusammen mit den jeweiligen Prüfbedingungen angegeben, beispielsweise ML (1+4) 100°C (Mooney viscosity, large rotor, Vorwärmzeit und Prüfzeit in Minuten, Prüftemperatur).

Die Viskositäten, der in Tabelle 1 genannten Kautschukmischungen, werden mittels Scherscheibenviskosimeter nach Mooney gemessen.

### Scorch-Verhalten (Anvulkanisationszeit t 5):

Des Weiteren kann mit der gleichen Prüfung wie oben beschrieben auch das "Scorch"-Verhalten einer Mischung gemessen werden. Die gewählte Temperatur ist in diesem Patent 130°C. Der Rotor läuft solang, bis der Drehmomentswert nach Durchlaufen eines Minimums auf 5 Mooney-Einheiten relativ zum Minimumswert angestiegen ist (t5). Je größer der Wert ist (hier Einheit Sekunden), umso langsamer findet die Anvulkanisation statt (hier hohe Scorch-Werte).

### Rheometer (Vulkameter) Ausvulkanisationszeit 170°C/t95:

Der Vulkanisationsverlauf am MDR (moving die rheometer) und dessen analytischen Daten werden an einem Monsanto-Rheometer MDR 2000 nach ASTM D5289-95 gemessen. Die Ergebnisse dieser Prüfung sind in Tabelle 2 zusammengestellt.

Bei der Ausvulkanisationszeit, wird die Zeit gemessen, bei der 95% des Kautschuks vernetzt ist. Die gewählte Temperatur war 170°C.

### Bestimmung der Härte:

Zur Bestimmung der Härte der erfindungsgemäßen Kautschukmischung wurden 6 mm starke Walzfelle aus der Kautschukmischung gemäß Rezepturen der Tabelle 1 hergestellt. Aus den Walzfellen wurden Prüfkörper mit 35 mm Durchmesser geschnitten, deren Shore-Härte A -Werte mittels eines digitalen Shore-Härte-Testers (Zwick GmbH & Co. KG, Ulm) bestimmt wurden.

### Zugversuch:

Der Zugversuch dient direkt zur Ermittlung der Belastungsgrenzen eines Elastomers. Die Längenausdehnung beim Bruch wird auf die Ausgangslänge bezogen und entspricht der Bruchdehnung. Weiterhin wird auch die Kraft beim Erreichen bestimmter Dehnungsstufen, meist 50, 100, 200 und 300% bestimmt und als Spannungswert ausgedrückt (Zugfestigkeit bei der angegebenen Dehnung von 300% oder Modul 300).

Die Prüfergebnisse sind in Tabelle 2 aufgeführt.

### Dyn. Dämpfung:

Dynamische Prüfverfahren werden zur Charakterisierung des Verformungsverhaltens von Elastomeren unter periodisch veränderten Belastungen verwendet. Eine von außen angebrachte Spannung verändert die Konformation der Polymerkette.

Bei dieser Messung wird der Verlustfaktor tan delta indirekt über das Verhältnis zwischen Verlustmodul G" und Speichermodul G' bestimmt.

## Patentansprüche

1. Kieselsäurehaltige Kautschukmischung, hergestellt aus mindestens einem Kautschuk, einem schwefelhaltigen Alkoxysilan, einem Vernetzer, einem Füllstoff, gegebenenfalls weiteren Kautschukhilfsprodukten, **dadurch gekennzeichnet, dass** diese Mischung 0,1 bis 15 Gew.-Teile, bezogen auf 100 Gewichtsteile an eingesetztem Kautschuk, eines Silizium-freien Polysulfid Additives der Formel (I) enthält
A-S-(S)ₓ-S-Y-S-(S)ₓ-S-A (I)
wobei x für 0, 1 oder 2 steht,
Y für eine ggf. substituierte oder auch Heteroatome enthaltene aliphatische, cycloaliphatische oder aromatische Gruppe steht und
A für einen Rest 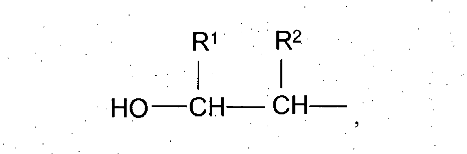 wobei R¹ bis R² gleich oder verschieden sind und Wasserstoff, C₁-C₆-Alkyl, C₅-C₆-Cycloalkyl, C₆-C₁₀-Aryl oder eine Gruppe -CH₂-OR⁵, -CH₂-CH₂-OR, -NHR⁵, -COR⁵, - COOR⁵, -CH₂COOR⁵, mit R⁵ = Wasserstoff, C₁-C₆-Alkyl, C₅-C₆-Cycloalkyl, C₆-C₁₀-Aryl oder C₁-C₆-Acyl bedeuten, oder
A für einen Rest 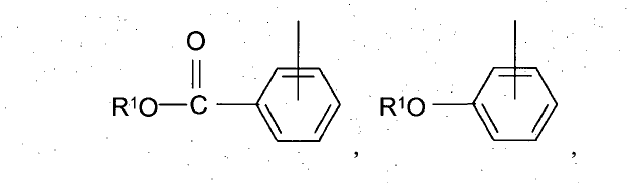 worin R¹ und R² gleich oder verschieden sind und Wasserstoff, C₁-C₆-Alkyl, C₅-C₆-Cycloalkyl, C₆-C₁₀-Aryl oder eine Gruppe -CH₂-OR⁵, -CH₂-CH₂-OR⁵, -NHR⁵, -COR⁵, - COOR⁵, -CH₂COOR⁵, mit R⁵ = Wasserstoff, C₁-C₆-Alkyl, C₅-C₆-Cycloalkyl, C₆-C₁₀-Aryl oder C₁-C₆-Acyl bedeuten, oder
A für einen Rest 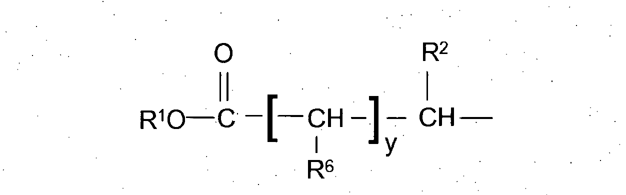 worin R¹ bis R² gleich oder verschieden sind und Wasserstoff, C₁-C₆-Alkyl, C₅-C₆-Cycloalkyl, C₆-C₁₀-Aryl oder eine Gruppe -CH₂-OR⁵, -CH₂-CH₂-OR⁵, -NHR⁵, -COR⁵, - COOR⁵, -CH₂COOR⁵, mit R⁵ = Wasserstoff, C₁-C₆-Alkyl, C₅-C₆-Cycloalkyl, C₆-C₁₀-Aryl oder C₁-C₆-Acyl bedeuten und R⁶ Wasserstoff, C₁-C₆-Alkyl, C₅-C₆-Cycloalkyl, C₆-C₁₀-Aryl oder eine Gruppe -CH₂-OR⁵, -CH₂-CH₂-OR⁵, -NHR⁵, -COR⁵, -COOR⁵, -CH₂COOR⁵, mit R⁵ = Wasserstoff, C₁-C₆-Alkyl, C₅-C₆-Cycloalkyl, C₆-C₁₀-Aryl oder C₁-C₆-Acyl bedeuten und y für 0, 1 oder 2 steht,
oder, wenn Y für -(CH₂)₆- und x für 0 steht, A für 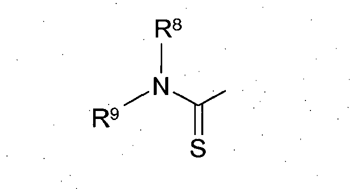 worin
R⁸ und R⁹ unabhängig voneinander für Wasserstoff, C₁-C₆-Alkyl, C₅-C₆-Cycloalkyl, C₆-C₁₀-Aryl oder eine Gruppe -CH₂-OR⁵, -CH₂-CH₂-OR⁵, -CH₂-COOR⁵, -CH₂-CH₂-COOR⁵ stehen und R⁸ und R⁹ auch ggf. zusammen mit dem jeweiligen Stickstoffatom einen Ring bilden können und R⁵ die oben genannte Bedeutung besitzt und wenigstens einer der Reste R⁸ und R⁹ ein oder mehrere Sauerstoffatome enthält.

2. Kieselsäurehaltige Kautschukmischung nach Anspruch 1, **dadurch gekennzeichnet, dass**
Y für eine der Gruppen 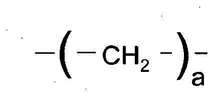 mit a = 2 - 12, 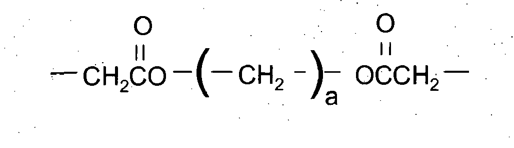 mit a = 2 - 12, 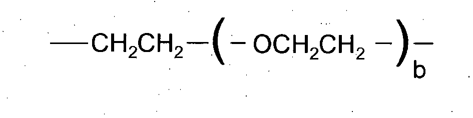 mit b = 1 - 4, 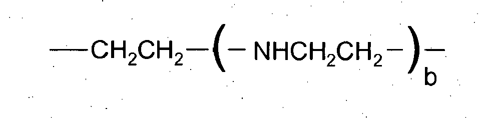 mit b = 1 - 4, steht, bevorzugt Y für -(CH₂)₆-.

3. Kieselsäurehaltige Kautschukmischung nach Ansprüchen 1 und 2, **dadurch gekennzeichnet, dass** als Polysulfid-Additiv wenigstens eine Verbindung der Formel (II) verwendet wird.

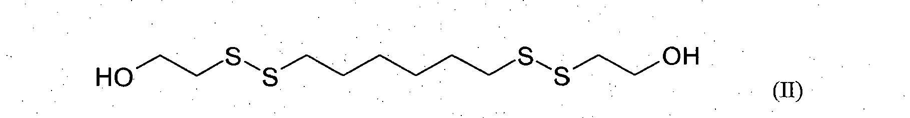

4. Kieselsäurehaltige Kautschukmischung nach Ansprüchen 1 und 2, **dadurch gekennzeichnet, dass** als Polysulfid-Additiv wenigstens eine Verbindung der Formel (III) verwendet wird.

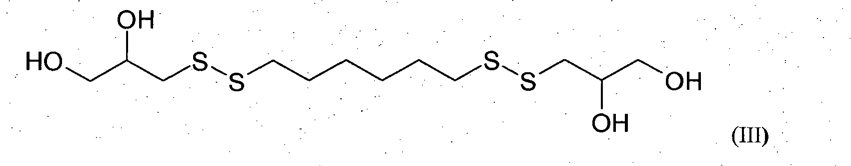

5. Kieselsäurehaltige Kautschukmischung nach Ansprüchen 1 und 2, **dadurch gekennzeichnet, dass** als Polysulfid-Komponente wenigstens eine der Verbindungen der Formeln (IV), (IVa), (V), (Va), (VI), (VIa) verwendet wird.

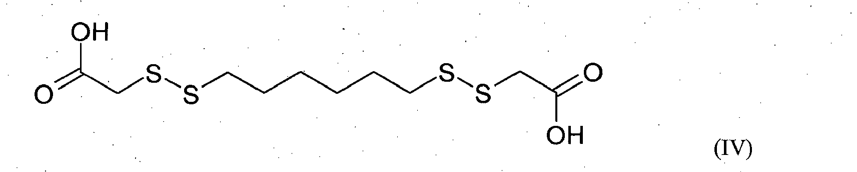

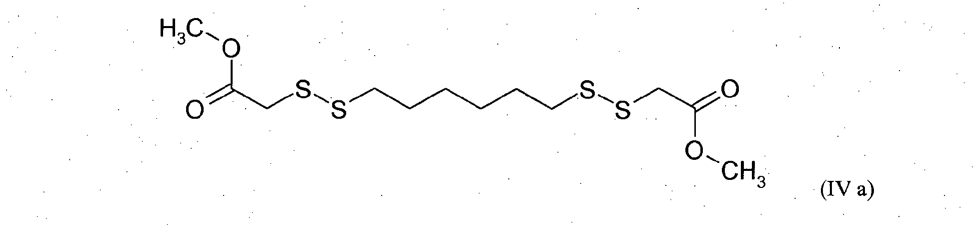

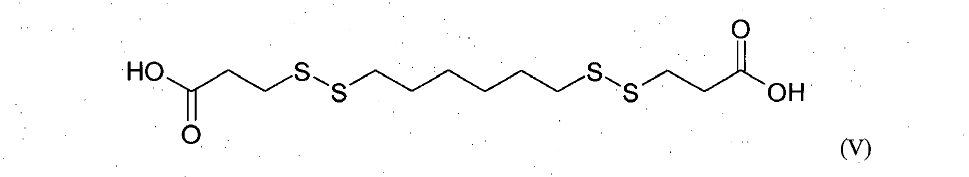

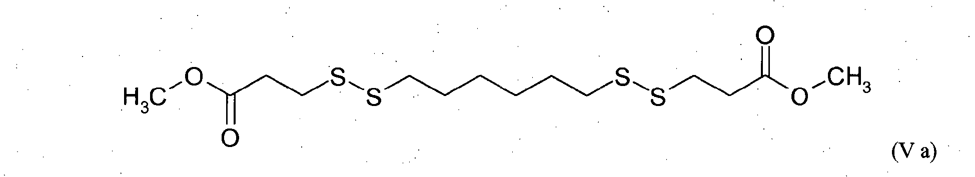

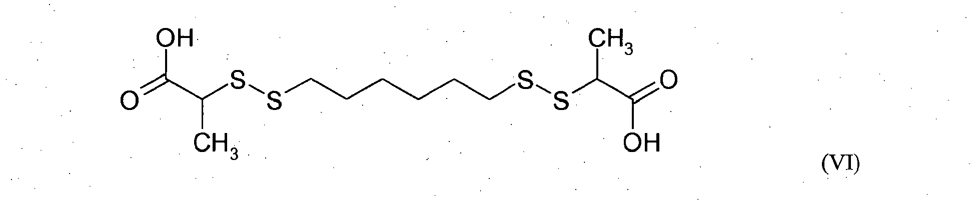

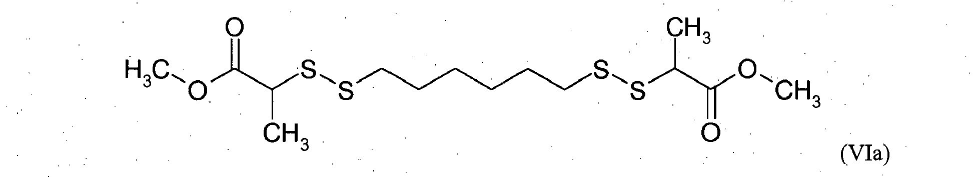

6. Kieselsäurehaltige Kautschukmischung nach Ansprüchen 1 und 2, **dadurch gekennzeichnet, dass** als Polysulfid-Additiv wenigstens eine Verbindung der Formel (VII) verwendet wird.

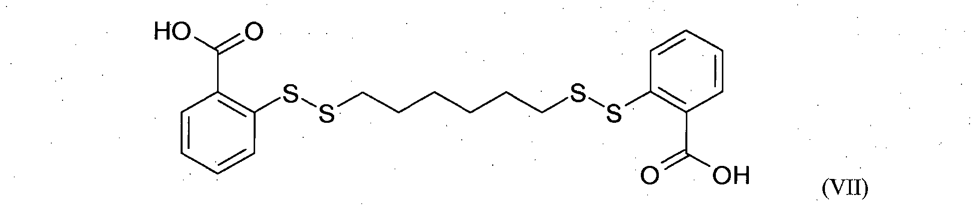

7. Kieselsäurehaltige Kautschukmischung nach Ansprüchen 1 und 2, **dadurch gekennzeichnet,**
**dass** als Polysulfid-Additiv wenigstens eine Verbindung der Formel (IX) 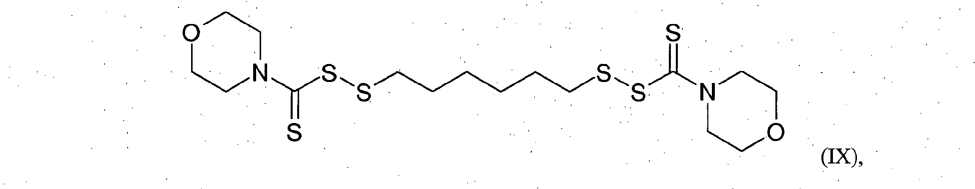 der Formel (X) 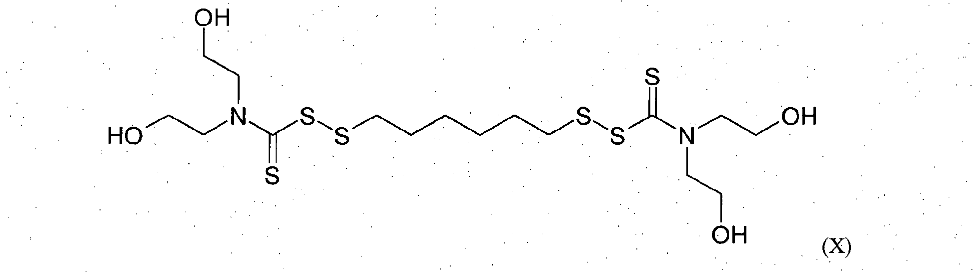 und/oder der Formel (XI) verwendet wird.

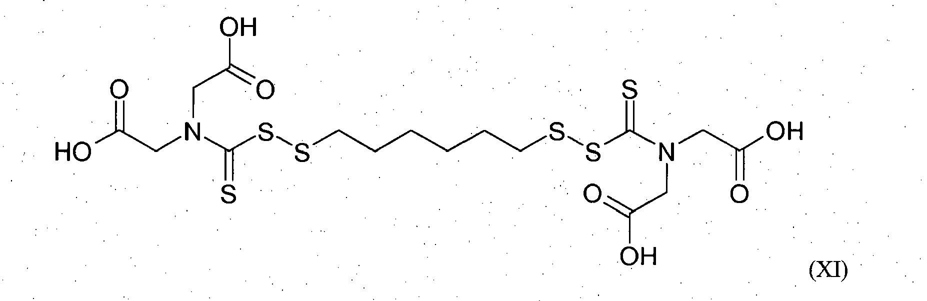

8. Kieselsäurehaltige Kautschukmischung nach einem der vorgenannten Ansprüche, **dadurch gekennzeichnet, dass** sie mindestens einen SBR-Kautschuk und mindestens einen BR-Kautschuk enthält.

9. Kieselsäurehaltige Kautschukmischung nach Anspruch 8, **dadurch gekennzeichnet, dass** sie mindestens einen SBR-Kautschuk und mindestens einen BR-Kautschuk im Gewichts-Verhältnis SBR:BR= 60:40 bis 90:10 enthält.

10. Kieselsäurehaltige Kautschukmischung nach Anspruch 9, **dadurch gekennzeichnet, dass** sie wenigstens einen SBR-Kautschuk und wenigstens einen BR-Kautschuk und wenigstens einen NR-Kautschuk im Verhältnis mindestens 60 und maximal 85 Gewichtsprozente SBR bezogen auf Kautschuk und mindestens 10 und maximal 35 Gewichtsprozente BR bezogen auf Kautschuk und mindestens 5 und maximal 20 Gewichtsprozente NR bezogen auf Kautschuk enthält.

11. Kieselsäurehaltige Kautschukmischung nach einem der vorgenannten Ansprüche, **dadurch gekennzeichnet, dass** sie 1 bis 15 Gewichtsteile eines oder mehrerer schwefelhaltiger Alkoxysilane bezogen auf 100 Gewichtsteile an eingesetztem Kautschuk enthält.

12. Kieselsäurehaltige Kautschukmischung nach einem der vorgenannten Ansprüche, **dadurch gekennzeichnet, dass** sie 0,3 bis 7 Gewichtsteile eines oder mehrerer Silizium-freien Polysulfid Additive bezogen auf 100 Gewichtsteile eingesetzten Kautschuk enthält.

13. Kieselsäurehaltige Kautschukmischung nach einem der vorgenannten Ansprüche, **dadurch gekennzeichnet, dass** das schwefelhaltige Alkoxysilan zum Silizium-freien polysulfid Additiv im Gewichtsverhältnis 1,5:1 bis 20:1, bevorzugt 5:1 bis 15:1 eingesetzt wird.

14. Kieselsäurehaltige Kautschukmischung nach einem der vorgenannten Ansprüche, **dadurch gekennzeichnet, dass** diese Mischung 0,5 bis 5 Gew.-Teile, bezogen auf 100 Gewichtsteile an eingesetztem Kautschuk eines Silizium-freien Polysulfid Additives enthält.

15. Kieselsäurehaltige Kautschukmischung nach einem der vorgenannten Ansprüche, **dadurch gekennzeichnet, dass** sie eines oder mehrerer anorganischer und/oder organischer Füllstoffe aufweist, wobei die Füllstoffe im Bereich von 50 bis 200 Gewichtsteile, vorzugsweise 60 bis 120 Gewichtsteile, bezogen auf 100 Gewichtsteile an eingesetzten Kautschuken verwandt werden.

16. Kieselsäurehaltige Kautschukmischung nach Anspruch 15, **dadurch gekennzeichnet, dass** die Füllstoffe aus der Gruppe oxidische, silikatische Füllstoffe und Russe oder deren Mischungen ausgewählt werden.

17. Kieselsäurehaltige Kautschukmischung nach Anspruch 16, **dadurch gekennzeichnet, dass** wenigstens ein Füllstoff ausgewählt wird aus der Gruppe gefällter Kieselsäuren und/oder Silikate mit einer spezifischen Oberfläche von 20 bis 400 m²/g, vorzugsweise mit einer spezifischen Oberfläche von 100 bis 200 m²/g.

18. Verwendung der kieselsäurehaltigen Kautschukmischung nach einem der vorgenannten Ansprüche zur Herstellung von Vulkanisaten und Kautschukformkörpern aller Art, insbesondere zur Herstellung von Reifen und Reifenbauteilen.

19. Vulkanisate und Kautschukformkörper aller Art, insbesondere Reifen und Reifenbauteile basierend auf kieselsäurehaltigen Kautschukmischungen nach einem der vorgenannten Ansprüche.

20. Polysulfid-Additive der Formel

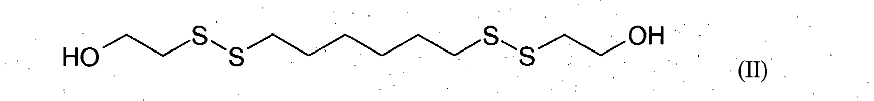

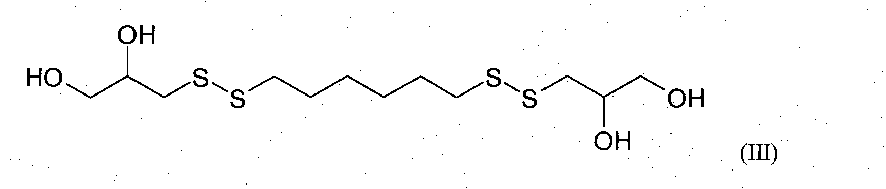

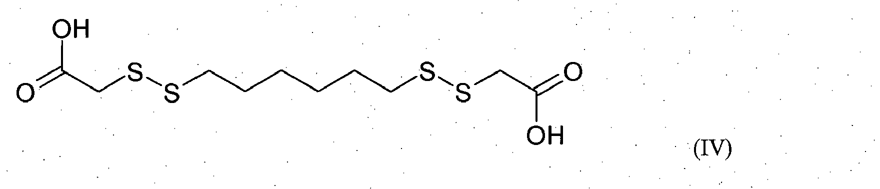

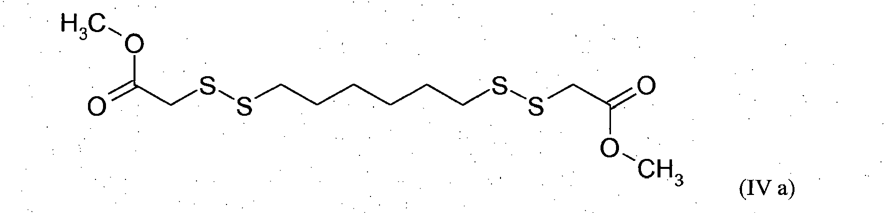

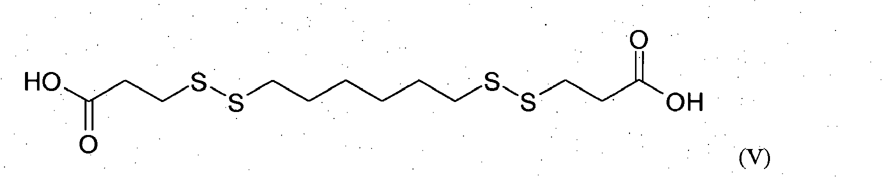

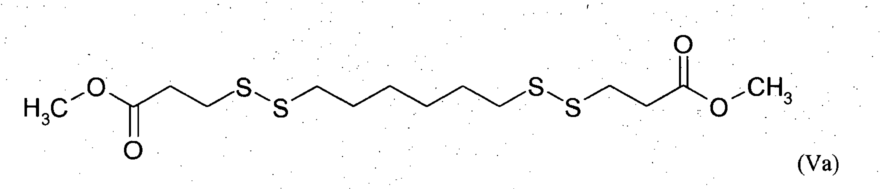

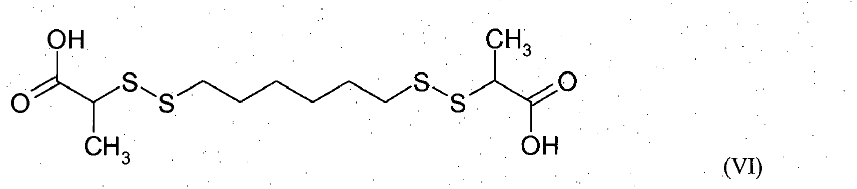

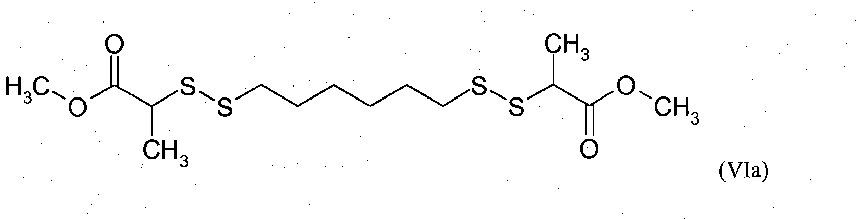

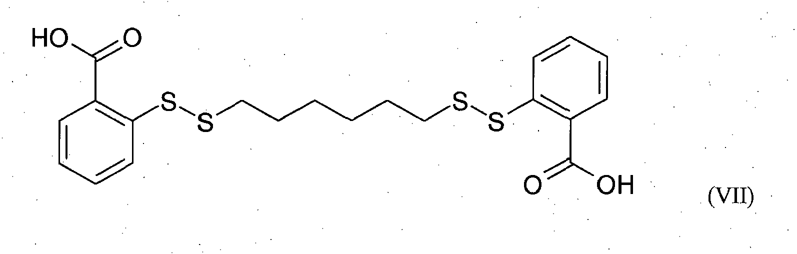

## Claims

1. Silica-containing rubber mixture produced from at least one rubber, from a sulphur-containing alkoxysilane, from a crosslinking agent, from a filler, and optionally from further rubber auxiliaries, **characterized in that** the said mixture comprises from 0.1 to 15 parts by weight, based on 100 parts by weight of rubber used, of a silicon-free polysulphide additive of the formula (I)
A-S-(S)ₓ-S-Y-S-(S)ₓ-S-A (I)
where x is 0, 1 or 2,
Y is an optionally substituted or heteroatom-containing aliphatic, cycloaliphatic or aromatic group and
A is a moiety 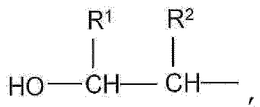 where R² to R² are identical or different and are hydrogen, C₁-C₆-alkyl, C₅-C₆-cycloalkyl, C₆-C₁₀-aryl or a group -CH₂-OR⁵, -CH₂-CH₂-OR⁵, -NHR⁵, -COR⁵, - COOR⁵, -CH₂COOR⁵, where R⁵ = hydrogen, C₁-C₆-alkyl, C₅-C₆-cycloalkyl, C₆-C₁₀-aryl or C₁-C₆-acyl, or
A is a moiety 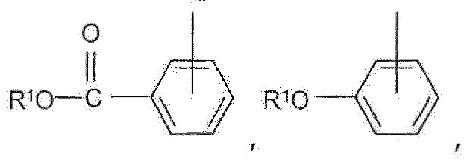 in which R¹ and R² are identical or different and are hydrogen, C₁-C₆-alkyl, C₅-C₆-cycloalkyl, C₆-C₁₀-aryl or a group -CH₂-OR⁵, -CH₂-CH₂-OR⁵, -NHR⁵, -COR⁵, -COOR⁵, -CH₂COOR⁵, where R⁵ = hydrogen, C₁-C₆-alkyl, C₅-C₆-cycloal kyl, C₆-C₁₀-aryl or C₁-C₆-acyl, or
A is a moiety 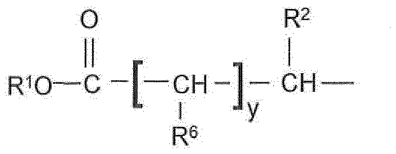 in which R¹ to R² are identical or different and are hydrogen, C₁-C₆-alkyl, C₅-C₆-cycloalkyl, C₆-C₁₀-aryl or a group -CH₂-OR⁵, -CH₂-CH₂-OR⁵, -NHR⁵, -COR⁵, -COOR⁵, -CH₂COOR⁵, where R⁵ = hydrogen, C₁-C₆-alkyl, C₅-C₆-cycloalkyl, C₆-C₁₀-aryl or C₁-C₆-acyl, and R⁶ is hydrogen, C₁-C₆-alkyl, C₅-C₆-cycloalkyl, C₆-C₁₀-aryl or a group -CH₂-OR⁵, -CH₂-CH₂-OR⁵, -NHR⁵, COR⁵, -COOR⁵, -CH₂COOR⁵, where R⁵ = hydrogen, C₁-C₆-alkyl, C₅-C₆-cycloalkyl, C₆-C₁₀-aryl or C₁-C₆-acyl and y is 0, 1 or 2, or, if Y is -(CH₂)₆- and x is 0, A is in which 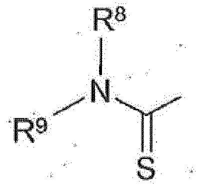
R⁸ and R⁹ are mutually independently hydrogen, C₁-C₆-alkyl, C₅-C₆-cycloalkyl, C₆-C₁₀-aryl or a group - CH₂-OR⁵, -CH₂-CH₂-OR⁵, -CH₂-COOR⁵ -CH₂-CH₂-COOR⁵, and R⁸ and R⁹ can optionally together with the respective nitrogen atom form a ring and R⁵ is as defined above and at least one of the moieties R⁸ and R⁹ comprises one or more oxygen atoms.

2. Silica-containing rubber mixture according to Claim 1, **characterized in that**
Y is one of the following groups: 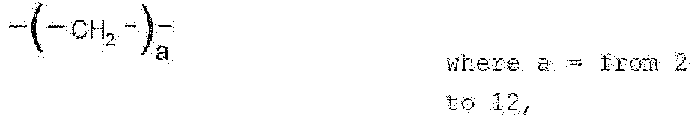 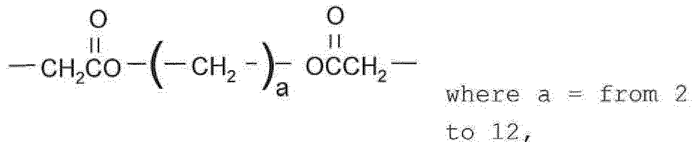 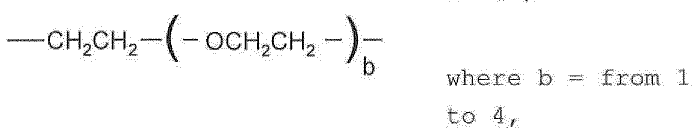 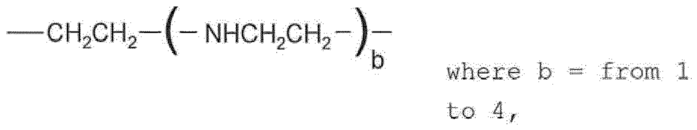 and preferably Y is -(CH₂)₆-.

3. Silica-containing rubber mixture according to Claims 1 and 2, **characterized in that** at least one compound of the formula (II) is used as polysulphide additive.

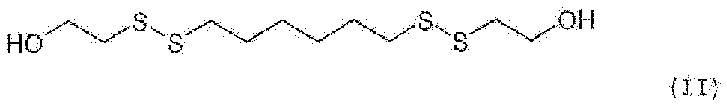

4. Silica-containing rubber mixture according to Claims 1 and 2, **characterized in that** at least one compound of the formula (III) is used as polysulphide additive.

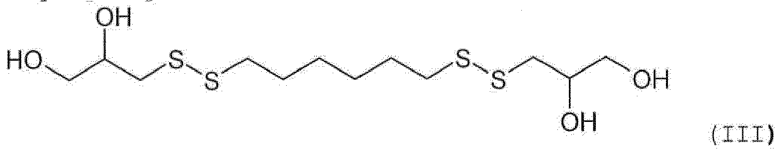

5. Silica-containing rubber mixture according to Claims 1 and 2, **characterized in that** at least one of the compounds of the formulae (IV), (IVa), (V), (Va), (VI), (VIa) is used as polysulphide component.

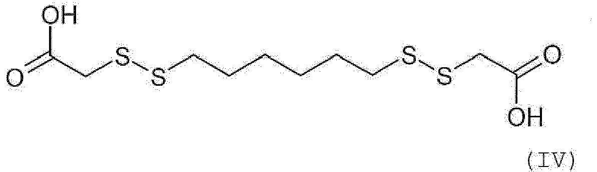

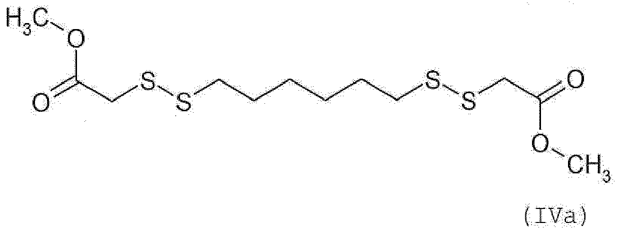

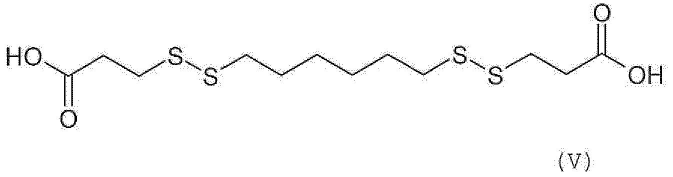

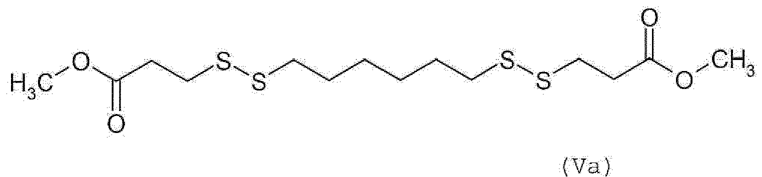

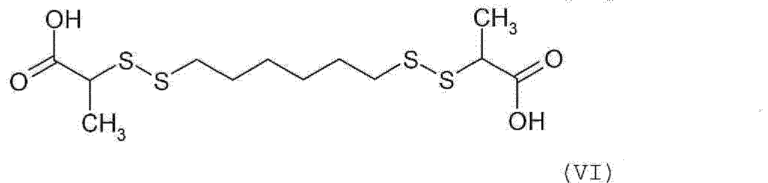

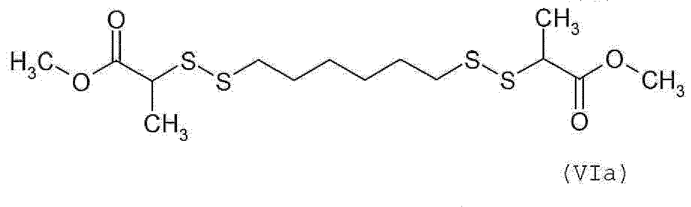

6. Silica-containing rubber mixture according to Claims 1 and 2, **characterized in that** at least one compound of the formula (VII) is used as polysulphide additive.

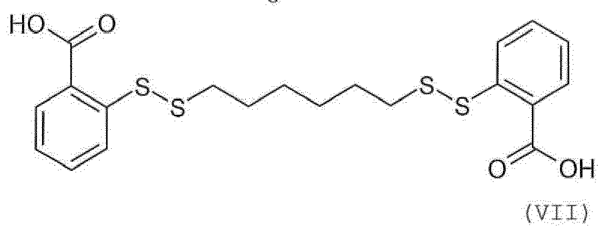

7. Silica-containing rubber mixture according to Claims 1 and 2, **characterized in that** at least one compound of the formula (IX) 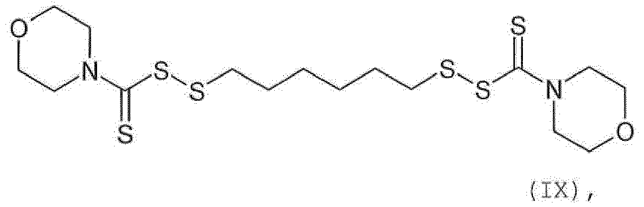 of the formula (X) 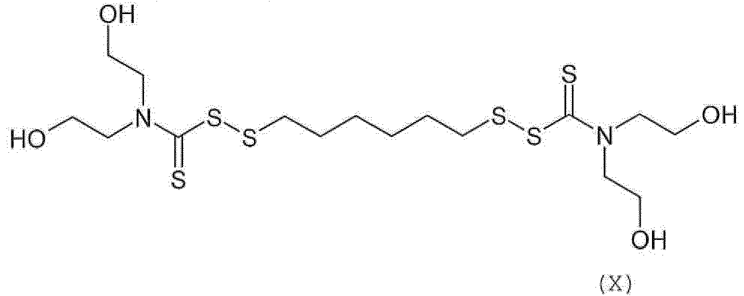 and/or of the formula (XI) is used as polysulphide additive.

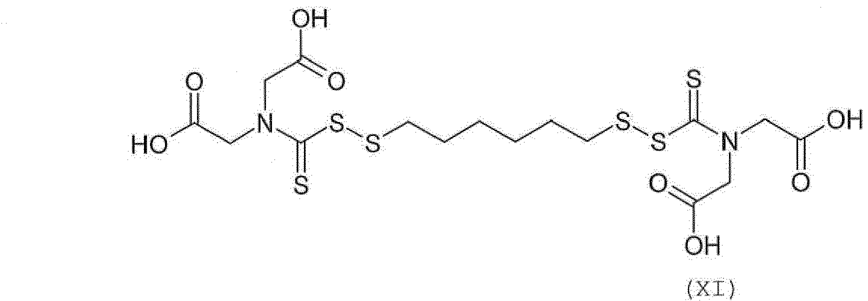

8. Silica-containing rubber mixture according to any of the preceding claims, **characterized in that** it comprises at least one SBR rubber and at least one BR rubber.

9. Silica-containing rubber mixture according to Claim 8, **characterized in that** it comprises at least one SBR rubber and at least one BR rubber in an SBR:BR ratio by weight of from 60:40 to 90:10.

10. Silica-containing rubber mixture according to Claim 9, **characterized in that** it comprises at least one SBR rubber and at least one BR rubber and at least one NR rubber in a ratio of at least 60 and at most 85 percent by weight of SIR, based on rubber, and at least 10 and at most 35 percent by weight of BR, based on rubber, and at least 5 and at most 20 percent by weight of NR, based on rubber.

11. Silica-containing rubber mixture according to any of the preceding claims, **characterized in that** it comprises from 1 to 15 parts by weight of one or more sulphur-containing alkoxysilanes, based on 100 parts by weight of rubber used.

12. Silica-containing rubber mixture according to any of the preceding claims, **characterized in that** it comprises from 0.3 to 7 parts by weight of one or more silicon-free polysulphide additives, based on 100 parts by weight of rubber used.

13. Silica-containing rubber mixture according to any of the preceding claims, **characterized in that** the sulphur-containing alkoxysilane is used in a ratio by weight of from 1.5:1 to 20:1, preferably from 5:1 to 15:1, in relation to the silicon-free polysulphide additive.

14. Silica-containing rubber mixture according to any of the preceding claims, **characterized in that** the said mixture comprises from 0.5 to 5 parts by weight, based on 100 parts by weight of rubber used, of a silicon-free polysulphide additive.

15. Silica-containing rubber mixture according to any of the preceding claims, **characterized in that** it comprises one or more inorganic and/or organic fillers, where the amounts used of the fillers are in the range from 50 to 200 parts by weight, preferably from 60 to 120 parts by weight, based on 100 parts by weight of rubbers used.

16. Silica-containing rubber mixture according to Claim 15, **characterized in that** the fillers are selected from the group of oxidic and silicatic fillers and carbon blacks or a mixture of these.

17. Silica-containing rubber mixture according to Claim 16, **characterized in that** at least one filler is selected from the group of precipitated silicas and/or silicates with a specific surface area of from 20 to 400 m²/g, preferably with a specific surface area of from 100 to 200 m²/g.

18. Use of the silica-containing rubber mixture according to any of the preceding claims for producing vulcanizates and rubber mouldings of any type, in particular for producing tyres and tyre components.

19. Vulcanizates and rubber mouldings of any type, in particular tyres and tyre components, based on silica-containing rubber mixtures according to any of the preceding claims.

20. Polysulphide additives of the formula

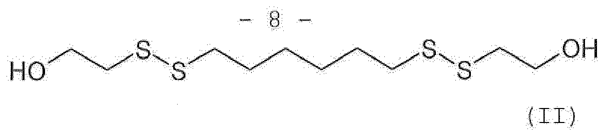

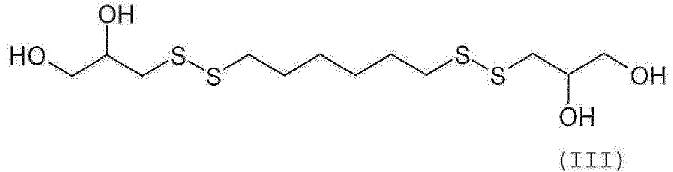

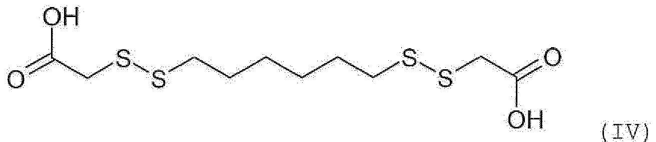

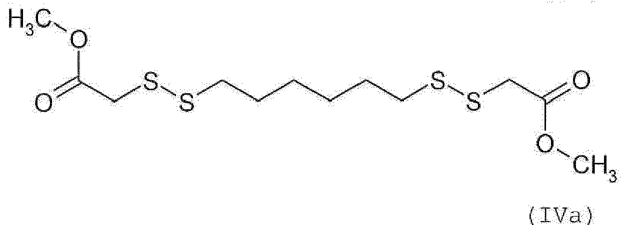

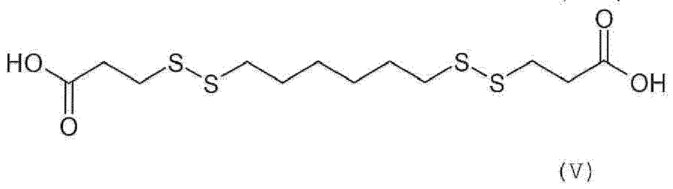

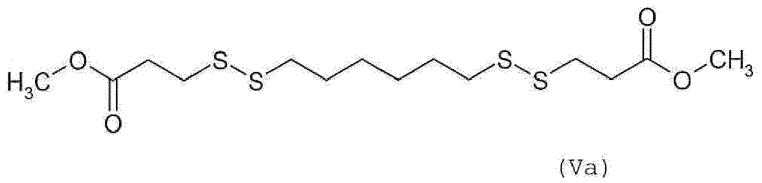

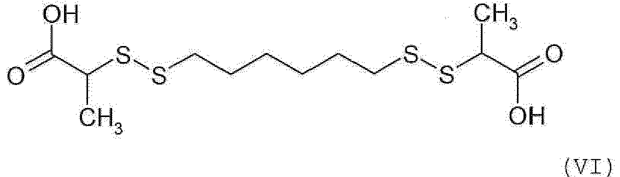

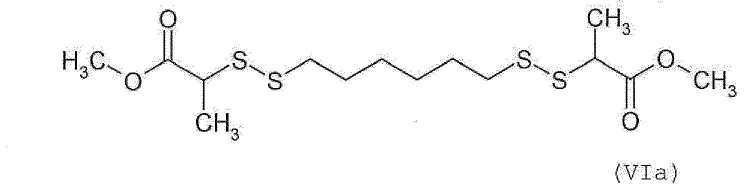

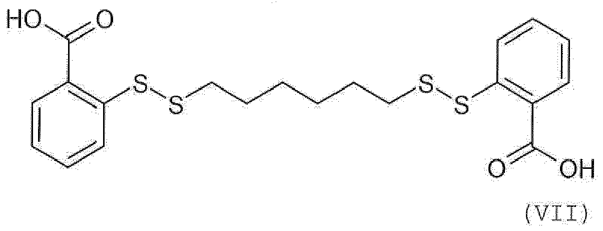

## Revendications

1. Composition de caoutchouc contenant de l'acide silicique, préparée à partir d'au moins un caoutchouc, un alcoxysilane soufré, un agent de réticulation, une charge, éventuellement d'autres produits auxiliaires pour caoutchouc, **caractérisée en ce que** cette composition contient 0,1 à 15 parties en poids, par rapport à 100 parties en poids de caoutchouc utilisé, d'un additif polysulfure exempt de silicium, de formule (I)
A-S-(S)ₓ-S-Y-S-(S)ₓ-S-A (I)
dans laquelle x représente 0,1 ou 2,
Y représente un groupe aliphatique, cycloaliphatique ou aromatique éventuellement substitué ou contenant également des hétéroatomes et
A représente un radical 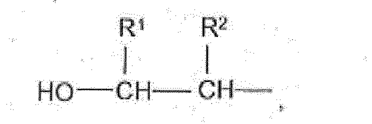 où R¹ et R² sont identiques ou différents et représentent un atome d'hydrogène, un groupe alkyle en C₁-C₆, cycloalkyle en C₅-C₆, aryle en C₆-C₁₀ ou un groupe -CH₂-OR⁵, -CH₂-CH₂-OR⁵, -NHR⁵, -COR⁵, -COOR⁵, CH₂COOR⁵, où R⁵ = hydrogène, allyle en C₁-C₆, cycloalkyle en C₅-C₆, aryle en C₆-C₁₀ ou acyle en C₁-C₆, ou
A représente un radical 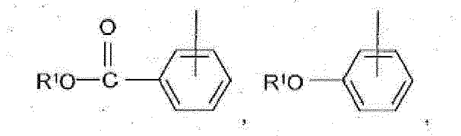 dans lequel R¹ et R² sont identiques ou différents et représentent un atome d'hydrogène, un groupe alkyle en C₁-C₆, cycloalkyle en C₅-C₆, aryle en C₆-C₁₀ ou un groupe -CH₂-OR⁵, -CH₂-CH₂-OR⁵, -NHR⁵, -COR⁵, -COOR⁵, -CH₂COOR⁵, où R⁵ = hydrogène, alkyle en C₁-C₆, cycloalkyle en C₅-C₆, aryle en C₆-C₁₀ ou acyle en C₁-C₆, ou
A représente un radical 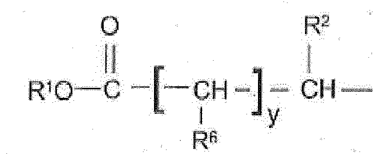 où R¹ et R² sont identiques ou différents et représentent un atome d'hydrogène, un groupe allyle en C₁-C₆, cycloalkyle en C₅-C₆, aryle en C₆-C₁₀ ou un groupe -CH₂-OR⁵, -CH₂-CH₂-OR⁵, -NHR⁵, -COR⁵ -COOR⁵ -CH₂COOR⁵, où R⁵ = hydrogène, alkyle en C₁-C₆, cycloalkyle en C₅-C₆, aryle en C₆-C₁₀ ou acyle en C₁-C₆ et R⁶ représente un atome d'hydrogène, un groupe alkyle en C₁-C₆, cycloalkyle en C₅-C₆, aryle en C₆-C₁₀ ou un groupe -CH₂-OR⁵, -CH₂-CH₂-OR⁵, -NHR⁵, -COR⁵, -COOR⁵, -CH₂COOR⁵, où R⁵ = hydrogène, alkyle en C₁-C₆, cycloalkyle en C₅-C₆, aryle en C₆-C₁₀ ou acyle en C₁-C₆ et y représente 0, 1 ou 2, ou, lorsque Y représente -(CH₂)₆- et x représente 0, A représente 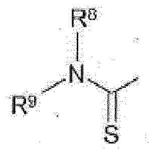 où
R⁸ et R⁹ représentent indépendamment l'un de l'autre un atome d'hydrogène, un groupe alkyle en C₁-C₆, cycloalkyle en C₅-C₆, aryle en C₆-C₁₀ ou un groupe -CH₂-OR⁵, -CH₂-CH₂-OR⁵, -CH₂COOR⁵, -CH₂-CH₂-COOR⁵ et R⁸ et R⁹ peuvent également former ensemble avec l'atome d'azote respectif un cycle et R⁵ a la signification indiquée plus haut et au moins l'un des radicaux R⁸ et R⁹ contient un ou plusieurs atomes d'oxygène.

2. Composition de caoutchouc contenant de l'acide silicique selon la revendication 1, **caractérisée en ce que**
Y représente l'un des groupes 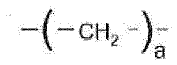 où a = 2 - 12, 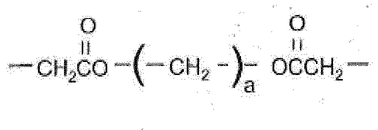 où a = 2 - 12, 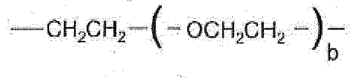 où b = 1 - 4, 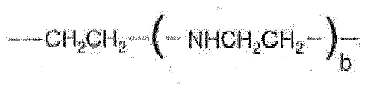 où b = 1 - 4, de préférence Y représente -(CH₂)₆-.

3. Composition de caoutchouc contenant de l'acide silicique selon les revendications 1 et 2, **caractérisée en ce qu'**on utilise comme additif polysulfure au moins un composé de formule (II).

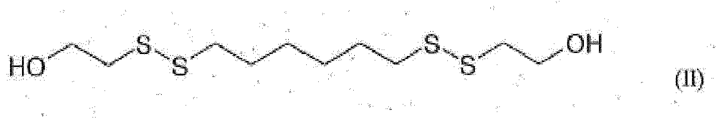

4. Composition de caoutchouc contenant de l'acide silicique selon les revendications 1 et 2, **caractérisée en ce qu'**on utilise comme additif polysulfure au moins un composé de formule (III)

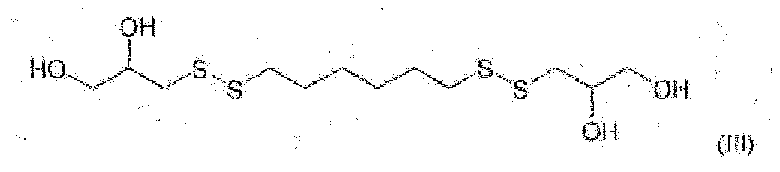

5. Composition de caoutchouc contenant de l'acide silicique selon les revendications 1 et 2, **caractérisée en ce qu'**on utilise comme composant polysulfure au moins un des composés de formules (IV), (IVa), (V), (Va), (VI), (VIa).

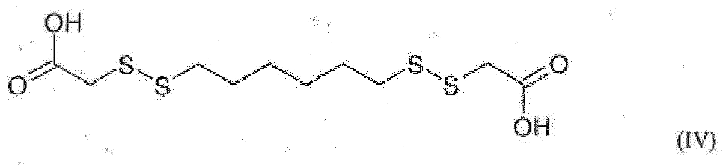

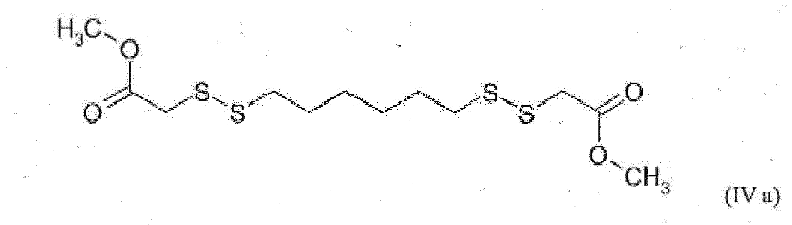

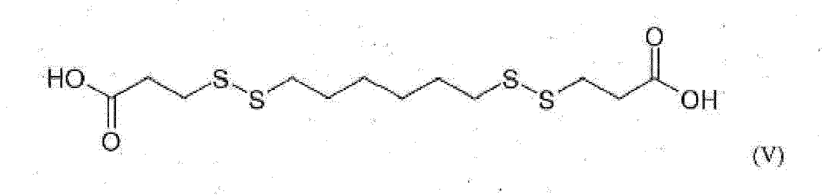

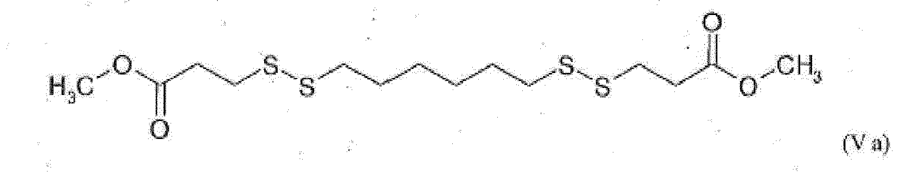

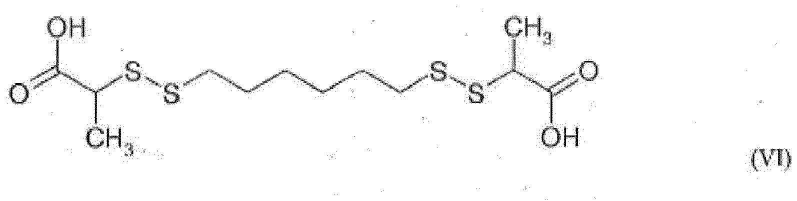

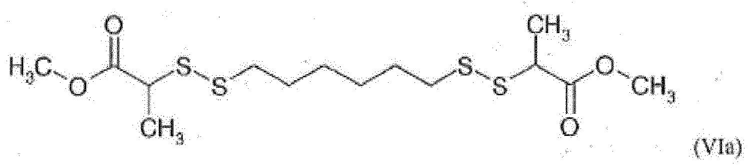

6. Composition de caoutchouc contenant de l'acide silicique selon les revendications 1 et 2, **caractérisée en ce qu'**on utilise comme additif polysulfure au moins un composé de formule (VII)

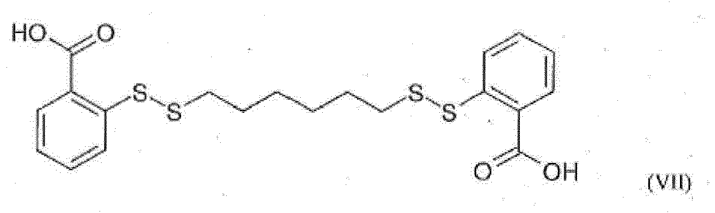

7. Composition de caoutchouc contenant de l'acide silicique selon les revendications 1 et 2, **caractérisée en ce qu'**on utilise comme additif polysulfure au moins un composé de formule (IX) 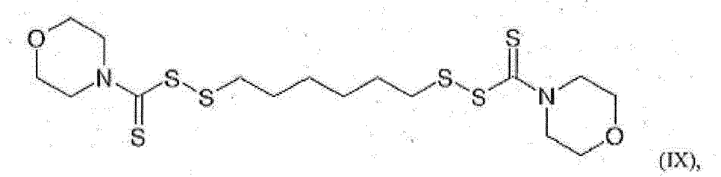 de formule (X) 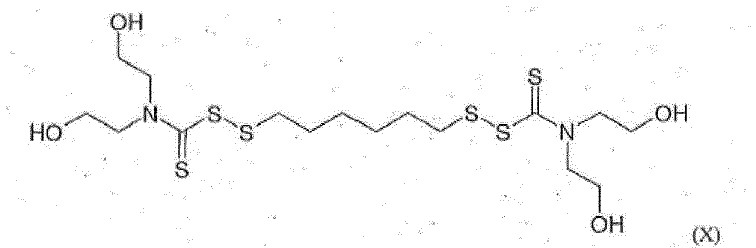 et/ou de formule (XI).

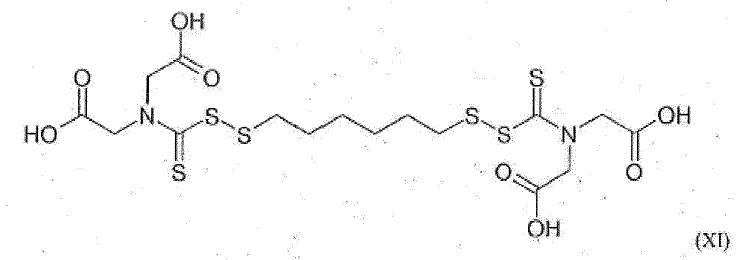

8. Composition de caoutchouc contenant de l'acide silicique selon l'une quelconque des revendications précédentes, **caractérisée en ce qu'**elle contient au moins un caoutchouc SBR et au moins un caoutchouc BR.

9. Composition de caoutchouc contenant de l'acide silicique selon la revendication 8, **caractérisée en ce qu'**elle contient au moins un caoutchouc SBR et au moins un caoutchouc BR en un rapport pondéral SBR:BR = 60:40 à 90:10.

10. Composition de caoutchouc contenant de l'acide silicique selon la revendication 9, **caractérisée en ce qu'**elle contient au moins un caoutchouc SBR et au moins un caoutchouc BR et au moins un caoutchouc NR en le rapport d'au moins 60 et d'au maximum 35 pour cent en poids de SBR par rapport au caoutchouc et d'au moins 10 et d'au maximum 35 pour cent en poids de BR par rapport au caoutchouc et d'au moins 5 et d'au maximum 20 pour cent en poids de NR par rapport au caoutchouc.

11. Composition de caoutchouc contenant de l'acide silicique selon l'une quelconque des revendications précédentes, **caractérisée en ce qu'**elle contient 1 à 15 parties en poids d'un ou de plusieurs alcoxysilanes soufrés par rapport à 100 parties en poids de caoutchouc utilisé.

12. Composition de caoutchouc contenant de l'acide silicique selon l'une quelconque des revendications précédentes, **caractérisée en ce qu'**elle contient 0,3 à 7 parties en poids d'un ou de plusieurs additifs polysulfure exempts de silicium par rapport à 100 parties en poids de caoutchouc utilisé.

13. Composition de caoutchouc contenant de l'acide silicique selon l'une quelconque des revendications précédentes, **caractérisée en ce qu'**on utilise l'alcoxysilane soufré par rapport à l'additif polysulfure exempt de silicium en un rapport pondéral de 1,5:1 à 20:1, de préférence de 5:1 à 15:1.

14. Composition de caoutchouc contenant de l'acide silicique selon l'une quelconque des revendications précédentes, **caractérisée en ce que** cette composition contient 0,5 à 5 parties en poids, par rapport à 100 parties en poids de caoutchouc utilisé, d'un additif polysulfure exempt de silicium.

15. Composition de caoutchouc contenant de l'acide silicique selon l'une quelconque des revendications précédentes, **caractérisée en ce qu'**elle comporte une ou plusieurs charges inorganiques et/ou charges organiques, les charges étant employées dans la plage de 50 à 200 parties en poids, de préférence de 60 à 120 parties en poids, par rapport à 100 parties en poids de caoutchoucs utilisés.

16. Composition de caoutchouc contenant de l'acide silicique selon la revendication 15, **caractérisée en ce que** les charges sont choisies dans le groupe constitué par des charges de type oxyde, des charges de type silicate et des noirs de carbone ou des mélanges de telles charges.

17. Composition de caoutchouc contenant de l'acide silicique selon la revendication 16, **caractérisée en ce qu'**au moins une charge est choisie dans le groupe des acides siliciques précipités et/ou des silicates ayant une surface spécifique de 20 à 400 m²/g, de préférence ayant une surface spécifique de 100 à 200 m²/g.

18. Utilisation de la composition de caoutchouc contenant de l'acide silicique selon l'une quelconque des revendications précédentes, pour la fabrication de vulcanisats et de corps moulés à base de caoutchouc de tout type, en particulier pour la fabrication de pneumatiques et de composants de pneumatiques.

19. Vulcanisats et corps moulés à base de caoutchouc, en particulier pneumatiques et composants de pneumatiques à base de compositions de caoutchouc contenant de l'acide silicique selon l'une quelconque des revendications précédentes.

20. Additifs polysulfure de formule
